(19) Europäisches Patentamt
European Patent Office
Office européen des brevets

(11) EP 4 403 358 A1

(12) **EUROPEAN PATENT APPLICATION**
published in accordance with Art. 153(4) EPC

(43) Date of publication:
**24.07.2024 Bulletin 2024/30**

(21) Application number: **22870068.8**

(22) Date of filing: **20.09.2022**

(51) International Patent Classification (IPC):
***B32B 27/16*** *(2006.01)* ***B32B 27/30*** *(2006.01)*

(52) Cooperative Patent Classification (CPC):
**B32B 27/16; B32B 27/30**

(86) International application number:
**PCT/JP2022/034961**

(87) International publication number:
**WO 2023/042922 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2021 JP 2021152115**

(71) Applicant: **Mitsubishi Chemical Corporation**
**Chiyoda-ku**
**Tokyo 100-8251 (JP)**

(72) Inventors:
- **MINETA, Shohei**
  **Tokyo 100-8251 (JP)**
- **NAKAYA, Fuminori**
  **Tokyo 100-8251 (JP)**
- **FUKUOKA, Hiroyuki**
  **Tokyo 100-8251 (JP)**
- **EGUCHI, Akio**
  **Tokyo 100-8251 (JP)**

(74) Representative: **Ter Meer Steinmeister & Partner Patentanwälte mbB**
**Nymphenburger Straße 4**
**80335 München (DE)**

# (54) PRODUCTION METHOD FOR MULTILAYER FILM, PRODCUCTION METHOD FOR DECORATIVE MELAMINE BOARD, MULTILAYER FILM, PROTECTIVE FILM FOR DECORATIVE MELAMINE BOARD, AND DECORATIVE MELAMINE BOARD

(57) Provided are a multilayer film, a protective film for a melamine decorative board, and a melamine decorative board, which achieve both adhesion to the melamine decorative board and surface hardness, have no sticking, and are excellent in handleability, and are able to prevent cracks during molding. The multilayer film (100A) of the present invention includes a resin layer (I) (101a) and a layer (X) (102a), in which the resin layer (I) (101a) contains an active energy ray-curable resin (A-1), the layer (X) (102a) contains an acrylic resin, and a storage elastic modulus E' of the layer (X) (102a) is 10 MPa or more and 2000 MPa or less.

EP 4 403 358 A1

## Description

[Technical Field]

The present invention relates to a production method for a multilayer film, a production method for a melamine decorative board, a multilayer film, a protective film for a melamine decorative board, and a melamine decorative board.
Priority is claimed on Japanese Patent Application No. 2021-152115, filed September 17, 2021, the content of which is incorporated herein by reference.

[Background Art]

An acrylic resin film is preferably used as an overlay film to protect a surface with being bonded to various molded articles such as outdoor building materials, for example, because the film is excellent in transparency and weather resistance.
A thermosetting resin high-pressure decorative board formed by using a melamine resin (hereinafter, melamine decorative board) is used on horizontal surfaces and vertical surfaces such as walls and partition panels of bathroom counters, desks, and sinks because the board has high surface hardness characteristics, excellent designability, thermal resistance, hot-water resistance, wear resistance, and contamination resistance. On the other hand, the melamine decorative board has inferior weather resistance and difficulty in the use of outdoor applications.
Meanwhile, in recent years, there is an example of using an acrylic resin film attached to the outermost surface of a melamine decorative board for an outdoor use application. For example, Patent Document 1 discloses an acrylic resin film that has excellent adhesiveness to a melamine decorative board and contains a polymer containing a monomer having a reactive substituent as a copolymer component, and a melamine decorative board on which the acrylic resin film is laminated.
In addition, there is an example of using a photocurable resin as an overlay layer instead of the acrylic resin film. For example, Patent Document 2 discloses a production method for a melamine decorative board on which a photocurable resin layer is laminated, which achieves both moldability and surface hardness by using, as an overlay layer of the melamine decorative board, an electron beam-curable resin film with a hardness gradient that allows hardness to increase from the side closest to a surface.
Furthermore, although not an applicable use for a melamine decorative board, there is an example of using an acrylic resin film and a photocurable resin in combination. For example, Patent Document 3 discloses a photocurable sheet formed of acrylic resin films on which a photocurable resin that can be photocurable after molding is laminated in order to achieve both moldability and surface hardness for automobile interiors. Patent Document 4 discloses, as an application for a vehicle interior, an acrylic resin film on which a thermosetting resin is laminated to improve surface hardness.
In addition, there is an example of laminating a film formed by lamination with a hard coat on a melamine decorative board. For example, Patent Document 5 discloses, assuming a bathhouse or the like, a multilayer film that is formed of a hard coat laminated on a PET film having heat seal properties as a synthetic resin film on the outermost surface of a melamine decorative board to improve humidity and thermal resistance, and a melamine decorative board formed by lamination with the multilayer film.

[Citation List]

[Patent Documents]

[Patent Document 1] PCT International Publication No. WO2014/192708
[Patent Document 2] Japanese Patent (Granted) Publication No. 4759020
[Patent Document 3] Japanese Patent (Granted) Publication No. 4293886
[Patent Document 4] Japanese Unexamined Patent Application, First Publication No. 2008-296539
[Patent Document 5] Japanese Patent (Granted) Publication No. 3124096

[Summary of Invention]

[Technical Problem]

However, the acrylic resin film disclosed in Patent Document 1 has the favorable adhesion to the melamine decorative board, but the surface hardness is inferior as compared with the electron beam-curable resin film disclosed in Patent Document 2. Meanwhile, an acrylic urethane resin is used for the electron beam-curable resin film disclosed in Patent Document 2 as a primer layer to be brought into contact with the melamine resin-impregnated paper, and thus it could not be said that the adhesion to the melamine decorative board after the durability test is sufficient. In addition, the electron beam-curable resin film has little sticking to a support film, and it cannot be said that the handleability is sufficiently excellent. Furthermore, in the films with the hard coat laminate disclosed in Patent Documents 3 and 4, the adhesion to the melamine decorative board is insufficient, and it cannot be said to exhibit sufficient moldability for the melamine decorative board that has different molding conditions from those of an automobile interior material. That is, there is a possibility that cracks may occur in the hard coat layer due to the heat-pressure molding for a long time at a high temperature. In addition, the film with the hard coat laminated disclosed in Patent Document 5 is intended for indoor use, and the PET film used as a film substrate is insufficient as for outdoor weather resistance. In addition, the melamine decorative board does not contain a weather resistant agent such as an ultraviolet absorber. Thus, the melamine decorative board on a base was not able to endure outdoor use.

An object of the present invention is to provide a multilayer film, a protective film for a melamine decorative board, and a melamine decorative board, which achieve both adhesion to the melamine decorative board and surface hardness, have no sticking, and are excellent in handleability, and are able to prevent cracks during molding. In addition, an object of the present invention is to provide a production method for a multilayer film and a production method for a melamine decorative board.

[Solution to Problem]

As a result of diligent research, the present inventors have found that the above-described object can be achieved by combining a resin layer having a specific composition, and completed the present invention. That is, the gist of the present invention is the following aspects.

[1] A production method for a multilayer film comprising: producing a film including a first layer formed from a resin composition (b) containing a core-shell rubber; and

applying a resin composition (a) containing an active energy ray-curable resin on the film including the first layer and curing the resin composition (a) to produce a second layer,
wherein the second layer has a thickness of 35 μm or less.

[2] A production method for a multilayer film comprising: producing a film including a first layer formed from a resin composition (b) containing a core-shell rubber and a reactive group-containing resin; and
applying a resin composition (a) containing an active energy ray-curable resin on the film including the first layer and curing the resin composition (a) to produce a second layer.
[3] A production method for a melamine decorative board serving as a laminate including

a multilayer film that includes a film including a first layer formed from a resin composition (b) containing an acrylic resin and includes a second layer formed from a resin composition (a) containing an active energy ray-curable resin, and
a melamine base material, wherein the film including the first layer is laminated on a melamine base material side, the production method comprising:
adhering the film including the first layer to the melamine base material by heating and pressurization.

[4] The production method for a melamine decorative board according to [3], the method further comprising unwinding the multilayer film from a roll around which the multilayer film has been wound without an inclusion, prior to the adhering the film including the first layer to the melamine base material.
[5] A multilayer film including a resin layer (I) and a layer (X),

wherein the resin layer (I) contains an active energy ray-curable resin (A-1),
the layer (X) contains an acrylic resin, and
a storage elastic modulus E' of the layer (X) at a measurement temperature of 100°C and a frequency of 0.1 Hz is 10 MPa or more and 2000 MPa or less.

[6] The multilayer film according to [5], wherein the layer (X) contains a core-shell rubber.
[7] The multilayer film according to [5] or [6], wherein the resin layer (I) has a thickness of less than 30 μm.

[8] The multilayer film according to any one of [5] to [7], wherein the resin layer (I) has a thickness of 1 μm or more.

[9] The multilayer film according to any one of [5] to [8], wherein the active energy ray-curable resin (A-1) comprises an ultraviolet-curable resin (A-1A).

[10] The multilayer film according to any one of [5] to [9], wherein the active energy ray-curable resin (A-1) comprises an electron beam-curable resin (A-1B).

[11] The multilayer film according to any one of [5] to [10], wherein the resin layer (I) further contains at least one resin selected from the group consisting of an acrylic resin and a urethane acrylate-based resin.

[12] The multilayer film according to any one of [5] to [11], wherein the resin layer (I) and the layer (X) are in contact with each other, and

the acrylic resin includes a reactive group-containing resin including a monomer unit having a reactive group.

[13] The multilayer film according to [12], wherein the reactive group-containing resin has a glass-transition temperature of 60°C or higher and lower than 150°C.

[14] The multilayer film according to [12] or [13], wherein the monomer unit having a reactive group contains at least one monomer unit having a reactive group selected from the group consisting of a monomer unit having a group reactive to an amino group and a monomer unit having a group reactive to a methylol group.

[15] The multilayer film according to any one of [12] to [14], wherein a content of the monomer unit having a reactive group with respect to 100% by mass of the reactive group-containing resin is 3% by mass or more.

[16] The multilayer film according to any one of [5] to [11], further comprising a resin layer (II) containing an acrylic resin, wherein the layer (X) is provided between the resin layer (I) and the resin layer (II), and the acrylic resin contained in the resin layer (II) contains a reactive group-containing resin containing a monomer unit having a reactive group.

[17] The multilayer film according to [16], wherein the reactive group-containing resin has a glass-transition temperature of 60°C or higher and lower than 150°C.

[18] The multilayer film according to [16] or [17], wherein the monomer unit having a reactive group contains at least one monomer unit having a reactive group selected from the group consisting of a monomer unit having a group reactive to an amino group and a monomer unit having a group reactive to a methylol group.

[19] The multilayer film according to any one of [16] to [18], wherein a content of the monomer unit having a reactive group with respect to 100% by mass of the reactive group-containing resin is 3% by mass or more.

[20] A protective film for a melamine decorative board comprising the multilayer film according to any one of [5] to [19].

[21] A melamine decorative board formed with a melamine base material laminated on a surface of the multilayer film according to any one of [5] to [15] opposite to the resin layer (I).

[22] A melamine decorative board formed with a melamine base material laminated on a surface of the multilayer film according to any one of [16] to [19] on a resin layer (II) side.

In addition, the present invention includes the following aspects.

[y1] An aspect corresponding to [1] to [23], in which in the resin composition (a), a content of the active energy ray-curable resin (A-1) is preferably 50% to 100% by mass; more preferably 60% to 100% by mass; and still more preferably 70% to 100% by mass with respect to a total mass of the resin composition (a).

[y2] An aspect corresponding to [1] to [23] and [y1], in which in the resin composition (a), a content of an additive (A-3) is preferably 0% to 40% by mass; more preferably 0% to 30% by mass; and still more preferably 0% to 20% by mass with respect to a total mass of the resin composition (a).

[y3] An aspect corresponding to [1] to [23], and [y1] and [y2], in which the resin composition (a) preferably contains a solvent (diluted with a solvent); and a content of the solvent is more preferably 5% to 80% by mass; the content is still more preferably 15% to 70% by mass, and the content is particularly preferably 30% to 60% by mass.

[y4] An aspect corresponding to [1] to [23], and [y1] to [y3], in which in the active energy ray-curable resin (A-1), a content of an acrylic polymer (P) is preferably 0% to 50% by mass; more preferably 1% to 45% by mass; and still more preferably 1.5% to 40% by mass with respect to a total mass of the active energy ray-curable resin (A-1) (excluding the solvent).

[y5] An aspect corresponding to [1] to [23], and [y1] to [y4], in which in the active energy ray-curable resin (A-1), a content of an acrylic polymer (R) is preferably 0.5% to 50% by mass; more preferably 1% to 45% by mass; and still more preferably 1.5% to 40% by mass with respect to a total mass of the active energy ray-curable resin (A-1) (excluding the solvent).

[y6] An aspect corresponding to [1] to [23], and [y1] to [y5], in which in the active energy ray-curable resin (A-1), a content of a photopolymerization initiator is preferably 0.1% to 15% by mass; more preferably 0.2% to 10% by mass; and still more preferably 0.5% to 8% by mass with respect to a total mass of the active energy ray-curable resin (A-1) (excluding the solvent).

[y7] An aspect corresponding to [1] to [23], and [y1] to [y6], in which in the active energy ray-curable resin (A-1), a content of a polymerizable monomer is preferably 30% to 100% by mass; more preferably 35% to 99% by mass;

and still more preferably 40% to 98% by mass with respect to a total mass of the active energy ray-curable resin (A-1) (excluding the solvent).

[y8] An aspect corresponding to [1] to [23], and [y1] to [y7], in which the film including the first layer is a film formed of the first layer and a third layer (may be a resin layer (III) in the multilayer film of the present invention), and the third layer is formed from a resin composition containing a core-shell rubber.

[y9] An aspect corresponding to [1] to [23], and [y1] to [y8], in which in the resin composition (b), a content of the core-shell rubber may be 0% to 90% by mass, is preferably 10% to 90% by mass, more preferably 10% to 85% by mass, and still more preferably 10% to 80% by mass with respect to a total mass of the reactive group-containing resin (B-1) and the core-shell rubber (B-2).

[y10] An aspect corresponding to [1] to [23], and [y1] to [y9], in which in the resin composition (b), a content of the reactive group-containing resin (B-1) may be 10% to 100% by mass, is preferably 10% to 90% by mass, more preferably 15% to 90% by mass, and still more preferably 20% to 90% by mass with respect to a total mass of the reactive group-containing resin (B-1) and the core-shell rubber (B-2).

[y 11] An aspect corresponding to [1] to [23], and [y 1] to [y 10], in which silica particles are preferably contained by less than 2 parts by mass, more preferably contained by less than 1.5 parts by mass, and still more preferably contained by less than 1.0 part by mass with respect to a total mass of the resin layer (II).

[y12] An aspect corresponding to [1] to [23], and [y 1] to [y11], in which a gel fraction of the resin composition (b) preferably is 5% to 80%, more preferably 5% to 75%, still more preferably 5% to 70%, and particularly preferably 5% to 60%.

[y13] An aspect corresponding to [1] to [23], and [y1] to [y12], in which silica particles are preferably contained by less than 2 parts by mass, more preferably contained by less than 1.5 parts by mass, and still more preferably contained by less than 1.0 part by mass with respect to a total mass of the resin layer (III).

[y14] An aspect corresponding to [1] to [23], and [y1] to [y13], in which a gel fraction of the resin layer (III) is preferably 5% to 80%, more preferably 5% to 75%, still more preferably 5% to 70%, and particularly preferably 5% to 60%.

[y15] An aspect corresponding to [1] to [23], and [y1] to [y14], in which the multilayer film is not laminated on another film (for example, a support film), and does not include peeling of another film when the multilayer film is laminated with a melamine base material.

[y16] An aspect corresponding to [1] to [23], and [y1] to [y15], in which with regard to the layer (X), a storage elastic modulus E' at a measurement temperature of 100°C and a frequency of 0.1 Hz is preferably 10 MPa or more and 2,000 MPa or less; more preferably 15 MPa or more and 1,800 MPa or less; still more preferably 15 MPa or more and 1,500 MPa or less; and particularly preferably 20 MPa or more and 1,500 MPa or less.

[y17] An aspect corresponding to [1] to [23], and [y1] to [y16], in which the active energy ray-curable resin (A-1) preferably contains at least one selected from the group consisting of a polymerizable oligomer, a monofunctional monomer, and a polyfunctional monomer each of which has a polymerizable functional group in its molecule; and more preferably contains at least one selected from the group consisting of polyfunctional urethane (meth)acrylate having a multiple radically polymerizable unsaturated group in the molecule, pentaerythritol triacrylate, pentaerythritol tetraacrylate, dipentaerythritol pentaacrylate, dipentaerythritol hexaacrylate, urethane (meth)acrylate with caprolactone skeleton, and polybutadiene (meth)acrylate.

[y18] An aspect corresponding to [1] to [23], and [y1] to [y17], in which the reactive group-containing resin (B-1) preferably contains a monomer unit having at least one reactive group selected from the group consisting of a monomer unit having a reactive group to an amino group and a monomer unit having a reactive group to a methylol group; more preferably contains a (meth)acrylic monomer unit having at least one reactive group selected from the group consisting of a (meth)acrylic monomer unit having a reactive group to an amino group and a (meth)acrylic monomer unit having a reactive group to a methylol group; still more preferably contains a (meth)acrylic monomer unit having a hydroxyl group, a carboxyl group, an acid anhydride group, or an epoxy group; particularly preferably contains a (meth)acrylic monomer unit having a hydroxyl group, a carboxyl group, or an epoxy group.

[y19] An aspect corresponding to [1] to [23], and [y1] to [y18], in which the core-shell rubber (B-2) is preferably a rubber particle having a multilayer structure formed of two or more layers in which one layer containing a hard polymer as an outer layer is formed on the other layer containing an elastic copolymer as an inner layer; more preferably one kind selected from the group consisting of acrylic rubber, silicone rubber, and butadiene rubber; still more preferably acrylic rubber; and preferably an acrylic rubber particle having a multilayer structure formed of two or more layers in which a layer containing, as an outer layer, a hard polymer (a-2) having a structure formed of one layer or two or more layers obtained by graft polymerization of a monomer containing alkyl methacrylate as a main component is formed on a layer containing, as an inner layer, an elastic copolymer (a-1) having a structure formed of one layer or two or more layers obtained from alkyl (meth)acrylate as a main component.

The present invention also includes the following aspects.

[z1] A multilayer film composed of at least two layers as follows:

a resin layer (I): a layer containing an active energy ray-curable resin (A-1) or a thermosetting resin (A-2); and
a resin layer (II): a layer containing a reactive group-containing resin (B-1).

[z2] The multilayer film according to [z1], in which the reactive group-containing resin (B-1) has a glass-transition temperature of 60°C or higher and lower than 100°C.
[z3] The multilayer film according to [z1] or [z2], in which the reactive group-containing resin (B-1) contains a monomer unit having a reactive group to an amino group or a methylol group.
[z4] The multilayer film according to any one of [z1] to [z3], in which a content of the monomer unit having a reactive group is 3% by mass or more with respect to 100% by mass of the reactive group-containing resin (B-1).
[z5] The multilayer film according to any one of [z1] to [z4], in which the resin layer (II) contains a core-shell rubber (B-2).
[z6] The multilayer film according to any one of [z1] to [z5], in which the resin layer (II) contains an ultraviolet absorber having a molecular weight of 300 or more.
[z7] The multilayer film according to any one of [z1] to [z6], further comprising a resin layer (III) between the resin layer (I) and the resin layer (II).
[z8] The multilayer film according to any one of [z1] to [z7], in which the resin layer (I) has a thickness of 1 to 100 μm.
[z9] The multilayer film according to any one of [z1] to [z8], in which the resin layer (I) contains a UV curable resin (A-1A).
[z10] The multilayer film according to any one of [z1] to [z8], in which the resin layer (I) contains an EB curable resin (A-1B).
[z11] The multilayer film according to any one of [z1] to [z8], in which the resin layer (I) contains an acrylic resin and/or a urethane acrylate-based resin.
[z12] A protective film for a melamine decorative board comprising the multilayer film according to any one of [z1] to [z11].
[z13] A melamine decorative board, in which the multilayer film according to any one of [z1] to [z11] and a melamine base material are laminated in an order of: the resin layer (I), the resin layer (II), and the melamine base material; or the resin layer (I), the resin layer (III), the resin layer (II), and the melamine base material.

[Advantageous Effects of Invention]

According to the present invention, a multilayer film, a protective film for a melamine decorative board, and a melamine decorative board, which achieve both adhesion to the melamine decorative board and surface hardness, have no sticking, and are excellent in handleability, and are able to prevent cracks during molding, can be provided. In addition, a production method for a multilayer film and a production method for a melamine decorative board can be provided.

[Brief Description of Drawings]

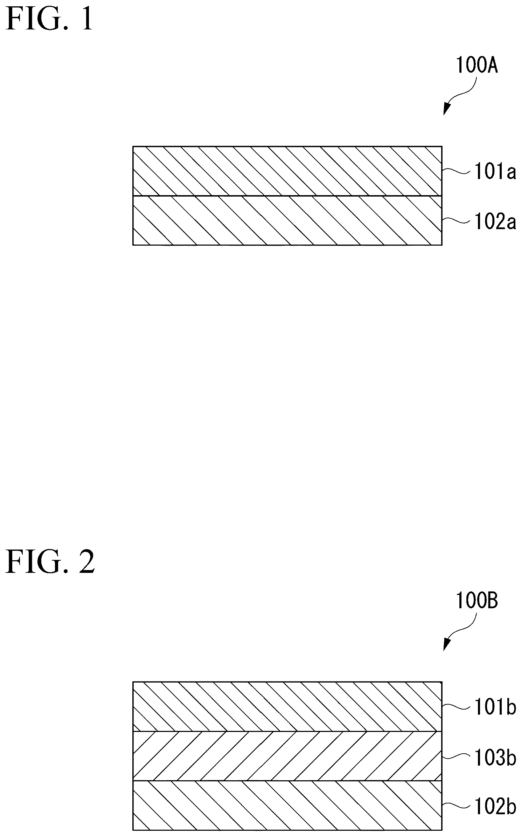

FIG. 1 is a schematic view showing a cross-section of one aspect of a multilayer film of the present invention.
FIG. 2 is a schematic view showing a cross-section of one aspect of the multilayer film of the present invention.

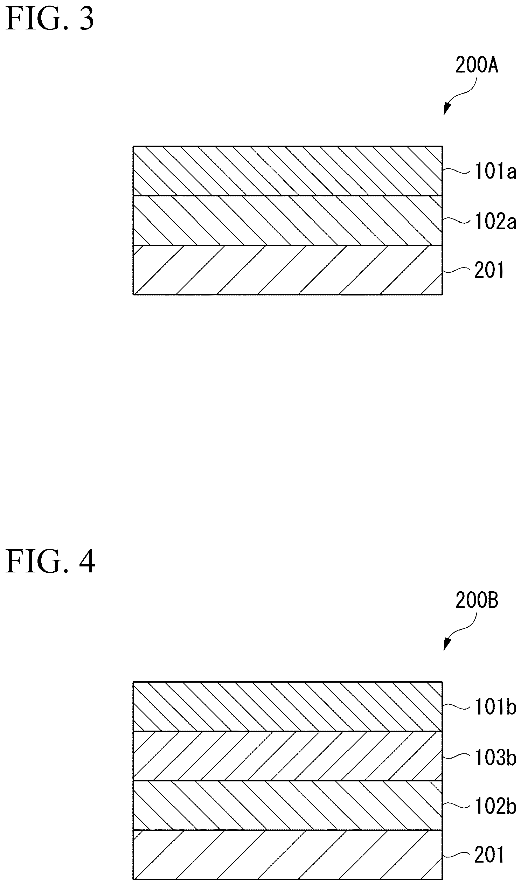

FIG. 3 is a schematic view showing a cross-section of one aspect of a melamine decorative board of the present invention.
FIG. 4 is a schematic view showing a cross-section of one aspect of the melamine decorative board of the present invention.

[Description of Embodiments]

Hereinafter, a multilayer film according to the present invention, and a protective film for a melamine decorative board provided with the multilayer film and a melamine decorative board will be described in detail with reference to embodiments thereof.
In the following description, a monomer means a compound having a polymerizable double bond copolymerizable with other monomers for producing a polymer, and a structural unit means a unit derived from a monomer constituting a polymer.
(Meth)acrylic in the following description means acrylic and/or methacrlic.
The term "to" in the present specification is used in the sense to include the numerical values described before and after "to" as a lower limit value and an upper limit value.

In the present specification, the terms "film" and "multilayer film" mean a plastic having a thickness of less than 250 μm.

[Multilayer Film]

The multilayer film of the present invention contains a resin layer (I) and a layer (X). The resin layer (I) contains an active energy ray-curable resin (A-1). The layer (X) contains an acrylic resin, and the storage elastic modulus E' is 10 MPa or more and 2,000 MPa or less at a measurement temperature of 100°C and a frequency of 0.1 Hz.

The multilayer film of the present invention is preferably a film formed of two layers as a certain aspect or preferably a film formed of three layers as another aspect. When the multilayer film of the present invention is a film formed of two layers, the multilayer film consists of a resin layer (I) and a layer (X). When the multilayer film of the present invention is a film formed of three layers, a layer (X) is provided between the resin layer (I) and a resin layer (II) described later.

When the multilayer film of the present invention is a multilayer film formed of four or more layers, the resin layer (I), the layer (X), another one or more layers, and a resin layer (II) described later may be laminated in this order.

In addition, when the multilayer film of the present invention is laminated with a melamine decorative board as a protective film for the melamine decorative board, a layer in contact with the melamine decorative board is the layer (X) in the case of the film formed of two layers, and the resin layer (II) in the case of the multilayer film formed of three layers or four or more layers.

[Resin Layer (I)]

The resin layer (I) contains an active energy ray-curable resin (A-1). The resin layer (I) is also referred to as a hard coat layer. Herein, the hard coat layer refers to a layer exhibiting a hardness of " 1.5 N" or greater in a scratch hardness test defined by European Committee for Standardization (CEN) standards, EN438-2.

[Active Energy Ray-curable Resin (A-1)]

Examples of the active energy ray-curable resin (A-1) include an ultraviolet (UV) curable resin (A-1A) and an electron beam (EB) curable resin (A-1B), which are conventionally used as active energy ray-curable resins. As the active energy ray-curable resin (A-1) in the resin layer (I), the ultraviolet-curable resin (A-1A) is preferable as a certain aspect, and the electron beam-curable resin (A-1B) is preferable as another aspect.

[Ultraviolet-curable Resin (A-1A)]

The ultraviolet-curable resin (A-1A) refers to a resin made of a composition, which is appropriately selected from and composed of a polymerizable oligomer having a polymerizable functional group in its molecule, a polymerizable monomer such as a monofunctional monomer or a polyfunctional monomer, an acrylic polymer (P), an acrylic polymer (R), a solvent, a photopolymerization initiator or the like, and three-dimensionally cross-linked and cured by ultraviolet rays (UV).

[Electron Beam-curable Resin (A-1B)]

The electron beam-curable resin (A-1B) refers to a resin made of a composition, which is appropriately selected from and composed of a polymerizable oligomer having a polymerizable functional group in its molecule, a polymerizable monomer such as a monofunctional monomer or a polyfunctional monomer, an acrylic polymer (P), an acrylic polymer (R), a solvent or the like, and three-dimensionally cross-linked and cured by electron beams (EB).

[Polymerizable Oligomer]

Examples of the polymerizable oligomer include oligomers having a radically polymerizable unsaturated group in its molecule, for example, oligomers having an epoxy (meth)acrylate skeleton, oligomers having a urethane (meth)acrylate skeleton, urethane (meth)acrylate having a polyether skeleton, and urethane (meth)acrylate having a prolactone skeleton, an oligomer having a polyester (meth)acrylate skeleton, and an oligomer having a polyether (meth)acrylate skeleton, and among these, an oligomer having polyfunctional urethane (meth)acrylate skeleton is particularly preferable from the viewpoint of achieving both weather resistance and hard coat properties. The mass-average molecular weight of the polymerizable oligomer is not particularly limited, and is preferably, for example, 1,000 to 5,000.

Here, the polyfunctionality means that a polymerizable oligomer or a polymerizable monomer described later contains, in its molecule, a plurality of radically polymerizable unsaturated groups, preferably 2 to 20 radically polymerizable unsaturated groups, and more preferably 3 to 10 radically polymerizable unsaturated groups.

[Polymerizable Monomer]

The polymerizable monomer is a monomer having three or more radically polymerizable double bonds, and contributes to, for example, the improvement of a surface hardness of the layer (I). Examples of the polymerizable monomer include multifunctional (meth)acrylate with trifunctionality or more such as trimethylolpropane ethylene oxide tri(meth)acrylate, dipentaerythritol tetra(meth)acrylate, ethoxylated trimethylolpropane tri(meth)acrylate, propoxylated trimethylolpropane tri(meth)acrylate, tris-2-hydroxyethylisocyanurate tri(meth)acrylate, glycerin tri(meth)acrylate, pentaerythritol tri(meth)acrylate, dipentaerythritol tri(meth)acrylate, ditrimethylolpropane tri(meth)acrylate, pentaerythritol tetra(meth)acrylate, ditrimethylolpropane tetra(meth)acrylate, dipentaerythritol penta(meth)acrylate, ditrimethylolpropane penta(meth)acrylate, dipentaerythritol hexa(meth)acrylate, and ditrimethylolpropane hexa(meth)acrylate; a modified product of a polyfunctional (meth)acrylate compound obtained by substitution of part of the trifunctional or higher polyfunctional (meth)acrylate with an alkyl group or ε-caprolactone; polyfunctional (meth)acrylate having a nitrogen atom-containing heterocyclic structure such as an isocyanurate structure; polyfunctional (meth)acrylate having a multi-branched resin-like structure, such as polyfunctional (meth)acrylate having a dendrimer structure and polyfunctional (meth)acrylate having a hyperbranched structure; urethane (meth)acrylate obtained by the addition of isocyanate, triisocyanate, isocyanurate with (meth)acrylate having a hydroxyl group, such as, pentaerythritol tri(meth)acrylate, dipentaerythritol tri(meth)acrylate, dipentaerythritol penta(meth)acrylate. Among these, from the viewpoint of compatibility with the polymerizable oligomer, pentaerythritol triacrylate, pentaerythritol tetraacrylate, dipentaerythritol pentaacrylate, and dipentaerythritol hexaacrylate are preferable, and dipentaerythritol pentaacrylate and dipentaerythritol hexaacrylate are more preferable.

The electron beam-curable resin can be used in combination with, for example, polymer urethane (meth)acrylate, such as urethane (meth)acrylate having a caprolactone skeleton obtained by the reaction of a polyol having a caprolactone skeleton, an organic isocyanate, and a hydroxyacrylate, and highly hydrophobic polybutadiene (meth)acrylate having a (meth)acrylate group in a side chain of polybutadiene oligomer, in addition to the above-described polymerizable oligomers and polymerizable monomers. The weather resistance can be further improved by the combination use. Among these, urethane (meth)acrylate having a caprolactone skeleton is more preferable in terms of improving weather resistance.

The polymerizable oligomer and the polymerizable monomer may be used alone or in combination of two or more. In addition, the number of radically polymerizable double bonds of the polymerizable oligomer and the polymerizable monomer is preferably 4 or more from the viewpoint of scratch resistance and is preferably 15 or less from the viewpoint of crack prevention during molding. For example, the number of radically polymerizable double bonds of the polymerizable oligomer and the polymerizable monomer is preferably 4 to 15.

In the present invention, for the purpose of adjusting the viscosity thereof, a diluent such as a monofunctional (meth)acrylate or a bifunctional (meth)acrylate can be appropriately used in combination with a polymerizable oligomer and/or a polymerizable monomer as long as the range does not impair the purpose of the present invention. These may be used alone or in combination of two or more, or a polyfunctional (meth)acrylate having a low molecular weight may also be used in combination. Furthermore, as the diluent, in addition to the monomers described above, a general organic solvent can be used to ensure the application properties of the resin composition for forming the resin layer (I).

Examples of the monofunctional (meth)acrylate include alkyl (meth)acrylates such as methyl (meth)acrylate, n-butyl (meth)acrylate, 2-ethylhexyl (meth)acrylate, lauryl (meth)acrylate, stearyl (meth)acrylate, cyclohexyl (meth)acrylate, and isobornyl (meth)acrylate; hydroxyalkyl (meth)acrylates such as hydroxyethyl (meth)acrylate, hydroxypropyl (meth)acrylate, and hydroxybutyl (meth)acrylate; alkoxyalkyl (meth)acrylates such as methoxyethyl (meth)acrylate, ethoxyethyl (meth)acrylate, methoxypropyl (meth)acrylate, and ethoxypropyl (meth)acrylate; aromatic (meth)acrylates such as benzyl (meth)acrylate and phenoxyethyl (meth)acrylate; amino group-containing (meth)acrylates such as diaminoethyl (meth)acrylate and diethylaminoethyl (meth)acrylate; methoxyethylene glycol (meth)acrylate, phenoxypolyethylene glycol (meth)acrylate, ethylene oxide-modified (meth)acrylate such as phenylphenol ethylene oxide-modified (meth)acrylate; heterocycle-containing (meth)acrylates such as glycidyl (meth)acrylate, and tetrahydrofurfuryl (meth)acrylate.

Examples of the bifunctional (meth)acrylate include alkanediol di(meth)acrylates such as 1,4-butanediol di(meth)acrylate, neopentyl glycol di(meth)acrylate, 1,6-hexanediol di(meth)acrylate, 1,9-nonanediol di(meth)acrylate, and tricyclodecanedimethylol di(meth)acrylate; bisphenol-modified di(meth)acrylates such as bisphenol A ethylene oxide-modified di(meth)acrylate and bisphenol F ethylene oxide-modified di(meth)acrylate; polyalkylene glycol di(meth)acrylates such as polyethylene glycol di(meth)acrylate, and polypropylene glycol di(meth)acrylate; urethane di(meth)acrylate and epoxy di(meth)acrylate.

[Acrylic Polymer (P)]

The acrylic polymer (P) contributes to, for example, the improvement of the adhesion between a cured product layer and various substrates. The acrylic polymer (P) is a polymer containing an alkyl (meth)acrylate as a main constituent unit, and in detail, a polymer other than the acrylic polymer (R) having a radically polymerizable double bond in a side chain described later. Examples of alkyl (meth)acrylate include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, and n-hexyl (meth)acrylate. These may be used alone, or in combination of two or more. Among these, from the viewpoint of compatibility between the acrylic polymer (P) with the polymerizable monomer and the thermal resistance of the hard coat layer, methyl (meth)acrylate is preferable.
A proportion of the constituent units derived from the alkyl (meth)acrylate constituting the acrylic polymer (P) is preferably 60% or more, more preferably 70% or more, still more preferably 80% or more, and preferably 99.9% or less in terms of mass. For example, the proportion of the constituent units is preferably 60% to 99.9%, more preferably 70% to 99.9%, and still more preferably 80% to 99.9%. In addition, in order to improve the adhesion and surface hardness of the cured product layer, the acrylic polymer (P) may have a radically polymerizable double bond at its terminal.
The mass-average molecular weight of the acrylic polymer (P) is preferably 1,000 or more and 70,000 or less, more preferably 3,000 or more and 60,000 or less, and still more preferably 5,000 or more and 50,000 or less. In a case where the acrylic polymer (P) is used within the above-described range, the scratch resistance and smoothness of the cured product layer can be ensured. The measurement method of the mass-average molecular weight is calculated by a method described in Examples.
From the viewpoint of improving the mechanical characteristics of the cured product layer, a glass-transition temperature (Tg) of the acrylic polymer (P) is preferably 50°C or higher, more preferably 60°C or higher, and still more preferably 70°C or higher. In addition, from the viewpoint of improving the processability of a laminate obtained by the lamination of the cured product layers, the glass-transition temperature (Tg) thereof is preferably 140°C or lower, more preferably 130°C or lower, and still more preferably 120°C or lower. The above upper limit and lower limit can be optionally combined. For example, 50°C to 140°C is preferable, 60°C to 130°C is more preferable, and 70°C to 120°C is still more preferable.
The Tg can be determined by Fox equation using a numerical value of Tg of a homopolymer of a component constituting the acrylic polymer (P). The Fox equation is shown below.

$$1/(273 + Tg) = \Sigma(wi/(273 + Tgi))$$

In the equation, Tg is the Tg (°C) of a copolymer (or a mixture thereof), wi is the mass fraction of a monomer i, and Tgi is the Tg (°C) of a homopolymer obtained by polymerization of the monomer i.
Here, as numerical values of the Tg of the homopolymer, numerical values described in POLYMER HANDBOOK THIRD EDITION (WILEY INTERSCIENCE) or values in a catalog of a monomer maker are used.
Examples of the production method for the acrylic polymer (P) include a solution polymerization method, a suspension polymerization method, and an emulsion polymerization method. The mass-average molecular weight of the acrylic polymer (P) can be adjusted by a polymerization initiator, a chain transfer agent, a solid concentration, reaction conditions, and the like.
The resin composition for forming the resin layer (I) may contain a solvent, and among solvents, preferably contains an organic solvent. In this case, from the viewpoint of facilitating dissolution in an organic solvent, the shape of the acrylic polymer (P) can be a particular shape. As a production method for the particulate acrylic polymer (P), a suspension polymerization method is preferable.
As the organic solvent, the organic solvent generally used in the art can be used.
As a production method for the acrylic polymer (P) by the suspension polymerization method, a method of adding a polymerization initiator to an aqueous suspension containing water, a dispersant, and a monomer, following heating this to carry out polymerization, then carrying out filtration, washing, dehydration, and drying the aqueous suspension containing the particulate acrylic polymer (P) is an exemplary example.
As the dispersant used in the suspension polymerization method, a poly(meth)acrylic acid alkali metal salt, a copolymer of a (meth)acrylic acid alkali metal salt and methyl (meth)acrylate, the following polyvinyl alcohol having a saponification of 70% or more and 100% or less, and methyl cellulose are exemplary examples. These may be used alone, or in combination of two or more.
From the viewpoint of improving dispersion stability in the suspension polymerization and washing properties, dehydration properties, drying properties, and fluidity of the obtained particulate polymer, the addition amount of the dispersant in the suspension polymerization method is preferably 0.005 parts by mass or more and 5 parts by mass or less and more preferably 0.01 parts by mass or more and 1 part by mass or less with respect to 100 parts by mass of the total monomers to be polymerized.

In the suspension polymerization method, for the purpose of improving dispersion stability, for example, electrolytes such as sodium carbonate, sodium sulfate, and manganese sulfate can be added to the aqueous suspension.

Examples of the polymerization initiator used in the suspension polymerization method include azo compounds such as 2,2'-azobisisobutyronitrile, 2,2'-azobis(2-methylbutyronitrile), and 2,2'-azobis(2,4-dimethylvaleronitrile); organic peroxides such as benzoyl peroxide, lauroyl peroxide, t-butylperoxy 2-ethylhexanoate, t-hexylperoxy 2-ethylhexanoate, 1,1,3,3-tetramethylbutylperoxy 2-ethylhexanoate, and t-hexyl hydroperoxide; inorganic peroxides such as hydrogen peroxide, sodium persulfate, ammonium persulfate. These may be used alone, or in combination of two or more.

A chain transfer agent can be used during the production of the acrylic polymer (P). Examples of the chain transfer agent include mercaptans such as n-dodecyl mercaptan, thioglycolic acid esters such as octyl thioglycolic acid, cobalt metal complexes such as bis(borondifluorodiphenylglyoxymate)cobalt (II), $\alpha$-methylstyrene dimer and terpinolene. These may be used alone, or in combination of two or more. Among these, from the viewpoint of the odor of the composition of the present invention and the weather resistance of the cured product of the composition of the present invention, cobalt metal complexes such as bis(borondifluorodiphenylglyoxymate)cobalt (II) are preferable.

From the viewpoint of polymerization in a short time and polymerization stability, the polymerization temperature during the production of the acrylic polymer (P) is preferably 50°C or higher and 130°C or lower and more preferably 60°C or higher and 100°C or lower.

[Acrylic Polymer (R)]

The acrylic polymer (R) is an acrylic polymer having a radically polymerizable double bond in the side chain, and contributes to the scratch resistance of the cured product layer and the adhesion to various substrates. The acrylic polymer (R) having a radically polymerizable double bond in the side chain refers to a compound having a radically polymerizable double bond, such as a carbon-carbon double bond, in the side chain of the acrylic polymer. Examples of an introduction method for the double bond include a reaction method for a compound having a double bond and a carboxyl group in an acrylic polymer having an epoxy group (method 1), and a reaction method for a compound having a double bond and an epoxy group in an acrylic polymer having a carboxyl group (method 2), a reaction method for a compound having a double bond and a carboxyl group in an acrylic polymer having a hydroxyl group (method 3), a reaction method for a compound having a double bond and a hydroxyl group in an acrylic polymer having a carboxyl group (method 4), a reaction method for a compound having a double bond and a hydroxyl group in an acrylic polymer having an isocyanate group (method 5), and a reaction method for a compound having a double bond and an isocyanate group in an acrylic polymer having a hydroxyl group (method 6). In addition, the above-described methods may be used in combination. In the present specification, a monomer, which has a carbon-carbon double bond and can be radically polymerized, may be referred to as a vinyl monomer.

In the method 1, examples of the vinyl monomer having an epoxy group, which is used to obtain an acrylic polymer having an epoxy group, include glycidyl (meth)acrylate, 3,4-epoxycyclohexyl (meth)acrylate, and 3,4-epoxycyclohexylmethyl (meth)acrylate. Among these, glycidyl (meth)acrylate is preferable, and glycidyl methacrylate is particularly preferable in consideration of favorable reactivity and ease of use of materials. These may be used alone or in combination of two or more.

In addition, examples of the compound having a double bond and a carboxyl group in the method 1 include (meth)acrylic acid, carboxyethyl (meth)acrylate, an adduct of glycerin di(meth)acrylate and succinic acid anhydride, an adduct of pentaerythritol tri(meth)acrylate and succinic acid anhydride, and an adduct of pentaerythritol tri(meth)acrylate and phthalic anhydride. Among these, (meth)acrylic acid, and an adduct of pentaerythritol tri(meth)acrylate and succinic acid anhydride is preferable, and (meth)acrylic acid is particularly preferable. Only one compound having a double bond and a carboxyl group may be used, or two or more kinds thereof may be combined.

In the method 2, examples of the vinyl monomer having a carboxyl group, which is used to obtain an acrylic polymer having a carboxyl group, include (meth)acrylic acid, carboxyethyl (meth)acrylate, and polybasic acid-modified (meth)acrylate. Among these, (meth)acrylic acid is preferable. These may be used alone or in combination of two or more.

In addition, in the method 2, examples of the compound having a double bond and an epoxy group include glycidyl (meth)acrylate and 4-hydroxybutyl (meth)acrylate glycidyl ether. Among these, glycidyl (meth)acrylate is preferable. These may be used alone or in combination of two or more.

In the method 3, examples of the vinyl monomer having a hydroxyl group, which is used to obtain an acrylic polymer having a hydroxyl group, include 2-hydroxyethyl (meth)acrylate, 4-hydroxybutyl (meth)acrylate, hydroxypropyl (meth)acrylate. These may be used alone or in combination of two or more.

In addition, in the method 3, as the compound having a double bond and a carboxyl group, the same compound as the compound in the method 1 can be used.

In the method 4, as the acrylic polymer having a carboxyl group, the same acrylic polymer as the acrylic polymer in the method 2 can be used.

In addition, in the method 4, examples of the compound having a double bond and a hydroxyl group include 2-hydroxyethyl (meth)acrylate, 4-hydroxybutyl (meth)acrylate, and hydroxypropyl (meth)acrylate. These may be used alone or in combination of two or more.

In the method 5, examples of the vinyl monomer having an isocyanate group, which is used to obtain an acrylic polymer having an isocyanate group, include isocyanate ethyl (meth)acrylate and the like.

In addition, in the method 5, as the compound having a double bond and a hydroxyl group, the same compound as the compound in the method 4 can be used.

In the method 6, as the acrylic polymer having a hydroxyl group, the same acrylic polymer as the acrylic polymer in the method 3 can be used.

In addition, in the method 6, examples of the compound having a double bond and an isocyanate group include isocyanate ethyl (meth)acrylate. These may be used alone or in combination of two or more.

Among the above-described methods, the method 1 is preferable in terms of ease of the control of the reaction. In the method 1, the double bond is introduced by a ring-opening addition reaction between an epoxy group of an acrylic polymer having an epoxy group and a carboxyl group in a compound having a double bond and the carboxyl group.

In the method 1, a monomer having an epoxy group in the acrylic polymer having the epoxy group is preferably within a range of 5% by mass or more, more preferably within a range of 10% by mass or more, still more preferably within a range of 20% by mass or more, and particularly preferably within a range of 50% by mass or more of the total amount of monomers constituting the acrylic polymer having the epoxy group. In addition, the upper limit is not particularly limited, but preferably within a range of 99.9% by mass or less. For example, the upper limit is preferably 5% to 99.9% by mass, more preferably 10% to 99.9% by mass, still more preferably 20% to 99.9% by mass, and particularly preferably 50% to 99.9% by mass. By the use within the above range, it is possible to achieve improvement of adhesion to the substrate and improvement of hardness.

In addition, with regard to the compound having a double bond and a carboxyl group in the method 1, a ratio of the compound having a double bond and a carboxyl group to an epoxy group in the acrylic polymer having the epoxy group is preferably 10% to 150% by mol, more preferably 30 to 130% by mol, and still more preferably 50% to 110% by mol. By the use within the above range, it is preferable from the viewpoint of allowing the reaction to proceed without overreaction or underreaction and reducing a residue of a raw material.

Furthermore, the acrylic polymer, such as the acrylic polymer having the above-described epoxy group, may be an acrylic polymer obtained by the copolymerization of a (meth)acrylate and another vinyl monomer other than those described above. The polymerization reaction of these raw materials is usually radical polymerization, and the polymerization can be carried out under conventionally known conditions.

Examples of the monomer that can be used as a raw material in combination include (meth)acrylates such as methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, phenyl (meth)acrylate, methoxy (poly)ethylene glycol (meth)acrylate, methoxy (poly)propylene glycol (meth)acrylate, methoxy (poly)ethylene glycol (poly)propylene glycol (meth)acrylate, octoxy (poly)ethylene glycol (meth)acrylate, octoxy (poly)propylene glycol (meth)acrylate, octoxy tetramethylene glycol (meth)acrylate, lauroxy (poly)ethylene glycol (meth)acrylate, and stearoxy (poly)ethylene glycol (meth)acrylate; acrylamides such as ethyl (meth)acrylamide, n-butyl (meth)acrylamide, i-butyl (meth)acrylamide, t-butyl (meth)acrylamide, N-hydroxyethyl (meth)acrylamide, N-hydroxypropyl (meth)acrylamide, and N,N-dihydroxyethyl (meth)acrylamide; styrenic monomers such as styrene, p-chlorostyrene, and p-bromostyrene. These may be used alone or in combination of two or more.

The acrylic polymer can be produced by a radical polymerization reaction using the above-described raw material vinyl monomer. The radical polymerization reaction is preferably carried out in the presence of a radical polymerization initiator in an organic solvent.

Examples of the organic solvent used for radical polymerization include ketone-based solvents such as acetone and methyl ethyl ketone (MEK); alcohol-based solvents such as ethanol, methanol, isopropyl alcohol (IPA), and isobutanol; ether-based solvents such as ethylene glycol dimethyl ether and propylene glycol monomethyl ether, ester-based solvents such as ethyl acetate; propylene glycol monomethyl ether acetate, 2-ethoxyethyl acetate; aromatic hydrocarbon solvents such as toluene. These organic solvents may be used alone or in combination of two or more.

Examples of the radical polymerization initiator used for radical polymerization include organic peroxides such as benzoyl peroxide and di-t-butyl peroxide; azo compounds such as 2,2'-azobisbutyronitrile, 2,2'-azobis(2,4-dimethylvaleronitrile), and 2,2'-azobis(4-methoxy-2,4-dimethylvaleronitrile). These radical polymerization initiators may be used alone or in combination of two or more. The radical polymerization initiator is preferably used within a range of 0.01 to 5 parts by mass with respect to 100 parts by mass of the vinyl monomer as a raw material in total.

In addition, during radical polymerization, for example, a chain transfer agent can be used for the purpose of controlling the mass-average molecular weight of the acrylic polymer. Examples of the chain transfer agent include thiol compounds such as butanethiol, octanethiol, decanediol, dodecanethiol, hexadecanethiol, octadecanethiol, cyclohexyl mercaptan, thiophenol, octyl thioglycolate, octyl 2-mercaptopropionate, octyl 3-mercaptopropionate, 2-ethylhexyl ester mercaptopropionate, 2-ethylhexyl thioglycolate, butyl-3-mercaptopropionate, mercaptopropyltrimethoxysilane, methyl-3-mercaptopropionate, 2,2-(ethylenedioxy)diethanethiol, ethanethiol, 4-methylbenzenethiol, 2-mercaptoethyl ester octoate, 1,8-dimercapto-3,6-dioxaoctane, decane trithiol, dodecyl mercaptan, diphenyl sulfoxide, dibenzyl sulfide, 2,3-dimethylcapto-1-propanol, mercaptoethanol, thiosalicylic acid, thioglycerol, thioglycolic acid, 3-mercaptopropionic acid, thiomalic acid, mercaptoacetic acid, mercaptosuccinic acid, and 2-mercaptoethanesulfonic acid. These may be used alone or in combination of two or more.

The use amount of the chain transfer agent is preferably 0.1 to 25 parts by mass, more preferably 0.5 to 20 parts by mass, and still more preferably 1.0 to 15 parts by mass with respect to 100 parts by mass of the vinyl monomer as a raw material in total.

The reaction time for radical polymerization is preferably 1 to 20 hours and more preferably 3 to 12 hours. In addition, the reaction temperature is preferably 40°C to 120°C and more preferably 50°C to 100°C.

In order to react the acrylic polymer with the compound having a double bond and a carboxyl group, the compound having a double bond and a carboxyl group may be added to the acrylic polymer obtained as described above, thereby allowing the reaction to proceed in the presence of one or two or more kinds of catalysts such as triphenylphosphine, tetrabutylammonium bromide, tetramethylammonium chloride, and triethylamine at a temperature of usually 90°C to 140°C and preferably 100°C to 120°C for usually approximately 3 to 9 hours. Here, the catalysts are preferably used at a ratio of about 0.5 to 3 parts by mass with respect to 100 parts by mass of the (meth)acrylate polymer as a raw material in total and a compound such as the compound having a double bond and a carboxyl group. This reaction may be subsequently carried out after producing the acrylic polymer by the polymerization reaction, or the acrylic polymer is temporarily fractionated from the reaction system, and a compound such as the compound having a double bond and a carboxyl group may be then added to carry out the reaction.

The amount of double bonds in the acrylic polymer (R) is preferably 0.1 to 10 mmol/g, more preferably 0.5 to 7.0 mmol/g, still more preferably 1.0 to 6.0 mmol/g, and particularly preferably 2.5 to 5.0 mmol/g. By the use within the above range, the scratch resistance of the cured product layer and the adhesion to various substrates are enhanced. The amount of double bonds means the concentration of (meth)acryloyl groups in the acrylic polymer, that is, the amount of (meth)acryloyl groups introduced.

In a case where the active energy ray-curable resin (A-1) contains the acrylic polymer (P) and/or the acrylic polymer (R), each content of the acrylic polymer (P) and the acrylic polymer (R) is preferably 0 to 50 parts by mass, more preferably 1 to 45 parts by mass, and still more preferably 1.5 to 40 parts by mass with respect to 100 parts by mass of the active energy ray-curable resin (A-1) (excluding the solvent).

[Another Resin]

The resin layer (I) may contain another resin other than the active energy ray-curable resin (A-1). Examples of the other resin include a thermosetting resin (A-2).

As the thermosetting resin (A-2), it is preferable to use a known thermosetting resin from the viewpoint of scratch resistance and weather resistance. For example, an acrylic resin, a urethane acrylate-based resin, a silicone acrylate-based resin, an epoxy-based resin, and an ester-based resin can be used. Among these, in particular, from the viewpoint of moldability, a urethane acrylate-based resin obtained by polymerization of a polyisocyanate ($\alpha$-1) and an acrylic polyol ($\alpha$-2) is preferable in terms of physical properties. In addition, from the viewpoint of weather resistance, an acrylic resin is preferable.

The resin layer (I) preferably further includes at least one resin selected from the group consisting of an acrylic resin and a urethane acrylate-based resin.

In a case where the thermosetting resin (A-2) is used in combination with the active energy ray-curable resin (A-1), the curing timing of the resin layer (I) may be either before curing or at the time of curing of the melamine decorative board; however, from the viewpoint of providing embossing to the surface, it is preferable to perform curing at the same time as curing of the melamine decorative board. By carrying out curing at the same time as the melamine decorative board cured, the melamine decorative board can be cured in a state in which the melamine decorative board is following the irregularities of an embossed sheet. Therefore, it is possible to obtain a surface state corresponding to the more complicated irregularity shape.

In a case where the thermosetting resin (A-2) is used, a gel fraction of the resin layer (I) before heat treatment for 60 minutes at a temperature of 150°C, which is the curing condition for the melamine decorative board, that is, in the uncured state is preferably 50% or less and more preferably 40% or less. In a case where the gel fraction is 50% or less, the thermosetting resin (A-2) can be cured at the same time as the melamine decorative board cured. Thus, the embossing imparting property is favorable.

In the case where the thermosetting resin (A-2) is used, a gel fraction of the resin layer (I) after heat treatment for 60 minutes at a temperature of 150°C, which is the curing condition for the melamine decorative board, that is, in the cured state is preferably 80% or more and more preferably 90% or more. In the case where the gel fraction is 80% or more, the surface hardness and chemical resistance of the melamine decorative board after molding are more favorable.

[Polyisocyanate (α-1)]

As the polyisocyanate (α-1), a known polyisocyanate can be used; in particular, because of low yellowing during heating, isocyanurate polyisocyanate consisting of diisocyanate compounds such as hexamethylene diisocyanate, dicyclohexylmethane diisocyanate, isophorone diisocyanate, 2,2,4-trimethylhexamethylene diisocyanate, and lysine diisocyanate; trimethylhexamethylene diisocyanate and lysine diisocyanate; adduct type polyisocyanate of the diisocyanate compound and trimethylolpropane; biuret polyisocyanate consisting of the diisocyanate compounds are preferable. Diisocyanate compounds such as hexamethylene diisocyanate, dicyclohexylmethane diisocyanate, isophorone diisocyanate, 2,2,4-trimethylhexamethylene diisocyanate, and lysine diisocyanate can also be used as it is.

[Acrylic Polyol (α-2)]

As the acrylic polyol (α-2), a known acrylic polyol can be used; in particular, a hydroxyl group-containing acrylic resin containing an alkyl methacrylate unit as a main component is preferable. A hydroxyl group-containing acrylic resin having the characteristics of the reactive group-containing resin (B-1) described later may be used.

The hydroxyl value of the acrylic polyol (α-2) is preferably 15 to 300 mgKOH/g. In a case where the hydroxyl value is 15 mgKOH/g or more, sufficient reactivity with the polyisocyanate (α-1) is obtained. In a case where the hydroxyl value is 300 mgKOH/g or less, water absorption of the thermosetting resin (A-2) is decreased, and water resistance of the multilayer film and the melamine decorative board formed by lamination with the multilayer film is improved. The hydroxyl value is more preferably 20 to 250 mgKOH/g and still more preferably 25 to 200 mgKOH/g in terms of reactivity and water resistance. The hydroxyl value is calculated by a method described later.

The polyisocyanate (α-1) is preferably used so that the amount of the polyisocyanate (α-1) added in a range of a molar quantity of the isocyanate group of 0.5 to 1.5 times a molar quantity of the acrylic polyol (α-2). Since the amount of isocyanate groups is sufficient relative to hydroxyl groups by employing the range of a molar quantity of 0.5 times or more and 1.5 times or less, the curing progresses to ensure the favorable scratch resistance and weather resistance, and the resin layer (I) is less likely to crack during molding.

[Additive (A-3)]

The resin layer (I) may contain an additive (A-3). As the additive (A-3), an ultraviolet absorber, a hindered amine light stabilizer, an antioxidant, a leveling agent, a wear resistance-imparting agent, an antibacterial agent, a filler, a pigment or dye, and a slip agent is preferably contained as long as it does not adversely affect the final physical properties of the intended decorative board. The above-described additive may be used alone or in combination of two or more.

From the viewpoint of improving the surface hardness of the resin layer (I), it is preferable to contain inorganic oxide particles or inorganic oxide particles with an organic functional group on a surface as a filler (hereinafter, also referred to as "surface-modified particles").

The inorganic oxide particle with an organic functional group on a surface is an inorganic oxide particle whose surface is coated with an organic functional group. By the inorganic oxide particle having the surface with an organic functional group, the storage stability in the paint is more favorable, and the compatibility with the resin and the dispersibility in the coating film are more favorable.

Examples of the organic functional group include an alkyl group, a glycidyl group, a (meth)acrylic group, a vinyl group, a hydroxy group, an amino group, an isocyanate group, and a mercapto group, and in terms of the compatibility and reactivity with a resin, a (meth)acrylic group, a vinyl group, and a mercapto group are preferable.

In the inorganic oxide particles, the inorganic oxide is preferably an oxide consisting of one inorganic component and oxygen, or a composite oxide consisting of two or more inorganic components and oxygen.

In addition, the inorganic component is Group 1 alkali metal, Group 2 alkaline earth metal, Group 3 to Group 12 transition metal, Group 13 to Group 15 typical metal, and semi-metals such as boron, silicon, and germanium. Furthermore, examples of two or more composite oxides can include non-metal components such as sulfur, phosphorus, and chlorine. Examples of the inorganic component include silicon, aluminum, titanium, tin, antimony, indium, and cadmium.

As the inorganic oxide particles, silica particles are preferable.

In addition, the average particle diameter of primary particles of the inorganic oxide particles is preferably 10 to 100 nm and more preferably 20 to 50 nm. In a case of 100 nm or less, the transparency is more favorable, and in a case of 10 nm or more, the effect of improving the hardness and the scratch resistance increases. Here, the average particle diameter of the primary particles means the average diameter of the particles calculated by a BET method of calculating a particle diameter from the correlation between a specific surface area and a particle diameter.

Examples of the inorganic oxide particles include colloidal silica, alumina, titanium oxide, tin oxide, different element doped tin oxide (such as antimony doped tin oxide (ATO)), indium oxide, different element doped indium oxide (such as tin doped indium oxide (ITO)), cadmium oxide, antimony oxide, and the like. These may be used alone or in combination of two or more. Among these, colloidal silica is particularly preferable from the viewpoint of availability, price, and the transparency and the development of wear resistance of the cured film of the obtained composition.

The colloidal silica can be used in the form in which the colloidal silica is dispersed in a normal water or in the form in which the colloidal silica is dispersed in an organic solvent, but in order to uniformly disperse a silane compound containing a silane coupling agent, the colloidal silica dispersed in an organic solvent is preferably used.

As the organic solvent, for example, methanol, isopropyl alcohol, n-butanol, ethylene glycol, dimethylacetamide, ethylene glycol mono-n-propyl ether, propylene glycol monomethyl ether, propylene glycol monomethyl ether acetate, methyl ethyl ketone, ethyl acetate, n-butyl acetate, xylene/n-butanol, and toluene can be used.

As the colloidal silica dispersed in the organic solvent, commercially available colloidal silica, such as methanol-dispersed silica sol (MA-ST, MA-ST-M), isopropyl alcohol-dispersed silica sol (IPA-ST, IPA-ST-L, IPA-ST-ZL, IPA-ST-UP), ethylene glycol-dispersed silica sol (EG-ST, EG-ST-L), dimethylacetamide-dispersed silica sol (DMAC-ST, DMAC-ST-L), xylene/butanol-dispersed silica sol (XBA-ST), methyl ethyl ketone-dispersed silica sol (MEK-ST, MEK-ST-L, MEK-ST-ZL, MEK-ST-UP), methyl isobutyl ketone-dispersed silica sol (MIBK-ST), propylene glycol monomethyl ether acetate-dispersed silica sol (PMA-ST), (in this paragraph, the above symbols in parentheses indicate trade names of Nissan Chemical Corporation), can be used.

As the surface-modified particles, commercially available surface-modified particles may be used, or surface-modified particles produced by coating a surface of inorganic oxide particles with an organic functional group may be used. In addition, as the surface-modified particles, it is also possible to use inorganic oxide particles, each of which has a surface containing an organic functional group and is further coated with an organic functional group.

Examples of a method of coating the surface of each inorganic oxide particle with the organic functional group include a method of adding a silane compound containing a silane coupling agent to the inorganic oxide particles dispersed in a solvent, mixing a mixture, and adding pure water to this mixture to carry out hydrolysis and a dehydration condensation reaction, a method of adding a compound having an isocyanate group to the inorganic oxide particles dispersed in an organic solvent that contains no hydroxyl group and heating the mixture in the presence of a catalyst, and other methods. In order to adjust the solid concentration of a dispersion liquid containing the surface-modified particles by the vaporization operation, the organic solvent used for the dispersion preferably has a boiling point of 150°C or lower.

Examples of the silane compound used for the coating of the inorganic oxide particles include silane compounds having an alkyl group such as ethyltrimethoxysilane, ethyltriethoxysilane, diethyldiethoxysilane, triethylethoxysilane, propyltrimethoxysilane, isobutyltrimethoxysilane, n-pentyltriethoxy silane, n-hexyltrimethoxysilane, n-hexyltriethoxysilane, n-heptyltrimethoxysilane, and hexamethyldisilane; silane compounds having a (meth)acrylic group such as 2-(meth)acryloyloxyethyltrimethoxysilane, 2-(meth)acryloyloxyethyltriethoxysilane, 2-(meth)acryloyloxyethyltrihydroxysilane, 3-(meth)acryloyloxypropyltrimethoxysilane, 3-(meth)acryloyloxypropyltriethoxysilane, 3-(meth)acryloyloxypropyltrihydroxy silane, 4-(meth)acryloyloxybutyltrimethoxysilane, 4-(meth)acryloyloxybutyltriethoxysilane, and 4-(meth)acryloyloxybutyltrihydroxysilane; silane compounds having a glycidyl group such as 2-(3,4-epoxycyclohexyl)ethyltrimethoxysilane, 3-glycidoxypropyltrimethoxysilane, and 3-glycidoxypropylmethyldiethoxysilane; vinyl groups such as vinyltrimethoxysilane and vinyltriethoxysilane.

Among these, from the viewpoint of ease of availability, 3-acryloyloxypropyltrimethoxysilane, 3-acryloyloxypropyltriethoxysilane, 3-methacryloyloxypropyltrimethoxysilane, and 3-methacryloyloxypropyltriethoxy silane are preferable.

In a case of 100 parts by mass of the resin layers (I) in total, from the viewpoint of improving the surface hardness, a content of the inorganic oxide particles or the surface-modified particles is preferably 4 parts by mass or more, more preferably 5 parts by mass or more, still more preferably 6 parts by mass or more, and particularly preferably 7 parts by mass or more. In addition, from the viewpoint of weather resistance and thermal resistance (crack resistance), 30 parts by mass or less is preferable, 25 parts by mass or less is more preferable, and 20 parts by mass or less is still more preferable. The above upper limit and lower limit can be optionally combined. For example, 4 to 30 parts by mass is preferable, 5 to 30 parts by mass is more preferable, 6 to 25 parts by mass is still more preferable, and 7 to 20 parts by mass is particularly preferable.

[Layer (X)]

The layer (X) contains an acrylic resin. The layer (X) has a storage elastic modulus E' of 10 MPa or more and 2,000 MPa or less at a measurement temperature of 100°C and a frequency of 0.1 Hz.

By the application of the storage elastic modulus E' to the above range, crack resistance during molding is improved.

The storage elastic modulus in the layer (X) is preferably 15 MPa or more and more preferably 20 MPa or more. On the other hand, 1800 MPa or less is preferable, and 1500 MPa or less is more preferable. It is possible to optionally combine the upper limit and lower limit described above. For example, 10 to 1,800 MPa is preferable, 15 to 1,800 MPa is more preferable, 15 to 1,500 MPa is still more preferable, and 20 to 1,500 MPa is particularly preferable. In order to adjust the storage elastic modulus within the above-described range, a plurality of methods are conceivable. For example, in addition to a method of adjusting the gel fraction of the resin composition constituting the layer (X), a method of adjusting the glass-transition temperature of the resin composition is preferable.

From the viewpoint of preventing cracks during molding, the layer (X) having the above-described specific storage elastic modulus is preferably a layer in contact with the outermost resin layer (I) in a case where the multilayer film of the present invention is used as a protective film for a melamine decorative board.

Therefore, in a case where the multilayer film of the present invention is a film formed of two layers, it is preferable that the resin layer (I) is disposed to be in contact with the layer (X) which is disposed to be in contact with the melamine decorative board.

In addition, in a case where the multilayer film of the present invention is a multilayer film formed of three layers or four or more layers, a layer that includes the resin layer (II) and that is neither resin layer (I) nor layer (X) is preferably disposed to be in contact with the melamine decorative board, the layer (X) is disposed thereon, and the resin layer (I) is preferably disposed on the layer (X) to be in contact with each other.

As described above, in a case where the multilayer film of the present invention is used as a protective film for a melamine decorative board and a case where the multilayer film of the present invention is a film formed of two layers, the layer (X) is in contact with the melamine decorative board. Therefore, from the viewpoint of the adhesion to the melamine decorative board, the layer (X) preferably contains a reactive group-containing resin (B-1) described later.

On the other hand, in a case where the multilayer film of the present invention is used as a protective film for a melamine decorative board and a case where the multilayer film of the present invention is a multilayer film formed of three layers or four or more layers, the layer (X) may be out of contact with the melamine decorative board. In such a case, it is not always necessary to ensure adhesion to the melamine decorative board. In this case, the layer (X) is not necessary to contain the reactive group-containing resin (B-1) described later, and preferably does not contain the reactive group-containing resin (B-1).

In terms of the resin layer (II) and the resin layer (III) described later, in a case where the multilayer film of the present invention is a film formed of two layers, the layer (X) corresponds to the resin layer (II). In addition, in a case where the multilayer film of the present invention is a multilayer film formed of three layers or four or more layers, the layer (X) corresponds to the resin layer (III). In this case, the resin layer (III) is disposed to be in contact with the resin layer (I), and layers except first to third layers may be disposed between the resin layer (II) and the resin layer (III).

The layer (X) contains an acrylic resin. In a case where the acrylic resin contained in the layer (X) includes a reactive group-containing resin, the acrylic resin may further contain a resin other than the reactive group-containing resin, preferably an acrylic resin. As the acrylic resin, the same acrylic resin as a thermoplastic polymer (B-3) described later can be used. In addition, the layer (X) may contain core-shell rubber. As the core-shell rubber, for example, it is preferable to use a core-shell rubber (B-2) and a core-shell rubber (C-1) described later.

[Resin Layer (II)]

In the case where the multilayer film of the present invention is a film formed of two layers, the multilayer film includes the resin layer (II) as the layer (X). In addition, in the case where the multilayer film of the present invention is a multilayer film formed of three layers or four or more layers, the multilayer film includes the resin layer (II) in addition to the resin layer (I) and the layer (X).

As described below, since the resin layer (II) contains the reactive group-containing resin (B-1), in a case where the multilayer film of the present invention is used as a protective film for a melamine decorative board, the resin layer (II) is preferably in contact with the melamine decorative board from the viewpoint of the adhesion to the melamine decorative board.

The resin layer (II) contains the reactive group-containing resin (B-1) as an acrylic resin. The reactive group-containing resin (B-1) contains a monomer unit having a reactive group. The acrylic resin in the resin layer (II) is preferably a reactive group-containing resin (B-1).

The resin layer (II) may contain a core-shell rubber (B-2) and/or a thermoplastic polymer (B-3) and/or an additive (B-4) in addition to the reactive group-containing resin (B-1), preferably contains the core-shell rubber (B-2), the thermoplastic polymer (B-3), and/or the additive (B-4), and more preferably contains the core-shell rubber (B-2), the thermoplastic polymer (B-3), and the additive (B-4).

From the viewpoint of transparency, the resin layer (II) preferably contains less than 2 parts by mass of silica particles, more preferably contains less than 1.5 parts by mass, and still more preferably contains less than 1.0 part by mass with respect to a total mass of the resin layer (II). The content of the silica particles may be 0 parts by mass.

The resin layer (II) may contain the core-shell rubber (B-2), the thermoplastic polymer (B-3), and the additive (B-4) in addition to the reactive group-containing resin (B-1), and may contain 10% to 100% by mass of the reactive group-containing resin (B-1) and 0% to 90% by mass of the core-shell rubber (B-2) with respect to 100% by mass of the reactive group-containing resin (B-1) and the core-shell rubber (B-2) in total (containing 0% by mass of the core-shell rubber (B-2) means that the core-shell rubber (B-2) is not contained). In a case where the reactive group-containing resin (B-1) and the core-shell rubber (B-2) are in the above-described range, it is advantageous from the viewpoint of adhesion and crack prevention. Furthermore, the resin layer (II) may contain 0 to 50 parts by mass of the thermoplastic polymer (B-3) (containing 0 parts by mass of the thermoplastic polymer (B-3) means that the thermoplastic polymer (B-3) is not contained) and 0 to 50 parts by mass of the additive (B-4) (containing 0 parts by mass of the additive (B-4) means that the additive (B-4) is not contained) with respect to 100 parts by mass of the reactive group-containing resin (B-1) and the core-shell rubber (B-2) in total (may not contain the core-shell rubber (B-2)).

From the viewpoint of adhesion and film handleability, flaw resistance, and crack prevention during molding, the resin layer (II) preferably contains 10% to 90% by mass of the reactive group-containing resin (B-1) and 10% to 90% by mass of the core-shell rubber (B-2), more preferably contains 15% to 90% by mass of the reactive group-containing resin (B-1) and 10 to 85% by mass of the core-shell rubber (B-2), and still more preferably 20% to 90% by mass of the reactive group-containing resin (B-1) and 10% to 80% by mass of the core-shell rubber (B-2) with respect to 100% by mass of the reactive group-containing resin (B-1) and the core-shell rubber (B-2) in total.

In addition, the resin layer (II) preferably contains 0.1 to 10 parts by mass of the thermoplastic polymer (B-3) and 0.1 to 10 parts by mass of the additive (B-4), more preferably contains 1 to 5 parts by mass of the thermoplastic polymer (B-3) and 1 to 5 parts by mass of the additive (B-4), and still more preferably 1.5 to 4 parts by mass of the thermoplastic polymer (B-3) and 2 to 4 parts by mass of the additive (B-4) with respect to 100 parts by mass of the reactive group-containing resin (B-1) and the core-shell rubber (B-2) in total.

From the viewpoint of adhesion and crack prevention during molding, it is preferable to contain an appropriate amount of both the reactive group-containing resin (B-1) and the core-shell rubber (B-2). As the content of the reactive group-containing resin (B-1) is increased, the content of the reactive group increases, thereby improving the adhesion. Furthermore, as the content of the core-shell rubber (B-2) is increased, the fracture inside the resin layer (II) is prevented, thereby improving the adhesion. Furthermore, as the content of reactive group-containing resin (B-1) is increased, the tensile elongation at break decreases, and the resin layer (I) is not stretched. Therefore, it is advantageous from the viewpoint of crack prevention during molding.

From the viewpoint of film handleability, the more core-shell rubber (B-2) is more preferable. As the content of the core-shell rubber (B-2) is increased, the toughness of the resin layer (II) is improved, and the handleability of the multilayer film is more favorable.

From the viewpoint of flaw resistance, the smaller the core-shell rubber (B-2), the more preferable. As the content of the core-shell rubber (B-2) is decreased, the surface hardness is increased, and the flaw resistance is improved.

In addition, from the viewpoint of film appearance, the smaller the core-shell rubber (B-2), the more preferable. As the content of the core-shell rubber (B-2) is decreased, the generation of a gelated product due to heat deterioration during melt molding is suppressed, contaminants are reduced, and the film appearance is favorable.

The gel fraction in the constituent components of the resin layer (II) is preferably 5% to 80%. As the gel fraction is higher, the toughness of the film is improved, and the handleability and film formation properties of the multilayer film are more favorable. In addition, as the gel fraction is lower, the generation of contaminants in the resin due to heat deterioration is suppressed, and the film appearance is more favorable. Furthermore, as the gel fraction is lower, the tensile elongation at break of the resin layer (II) is smaller, and the resin layer (I) is thus not stretched during molding, thereby preventing cracking. In a case where the gel fraction is 5% to 80%, it is possible to achieve film toughness, film appearance, and crack prevention during molding. The gel fraction is more preferably 5% to 75%, still more preferably 5% to 70%, and particularly preferably 5% to 60%. The gel fraction can be set to a desired range by, for example, the adjustment of the addition amount of the core-shell rubber contained in the resin layer (II).

[Reactive Group-containing Resin (B-1)]

The acrylic resin contained in the resin layer (II) or the reactive group-containing resin (B-1) as a part of the acrylic resin contains a monomer unit having a reactive group. From the viewpoint of adhesion to the melamine decorative board, the monomer unit having a reactive group is preferably a monomer unit having at least one reactive group selected from the group consisting of a monomer unit having a reactive group to an amino group and a monomer unit having a reactive group to a methylol group (hereinbelow, referred to as a monomer unit having a reactive group to an amino group or a methylol group), and more preferably a (meth)acrylic monomer unit having at least one reactive group selected from the group consisting of a (meth)acrylic monomer unit having a reactive group to an amino group and a (meth)acrylic monomer unit having a reactive group to a methylol group.

The reactive group-containing resin (B-1) can contain, for example, an aromatic vinyl monomer unit such as styrene and other monomer units, in addition to the monomer unit having a reactive group.

Specifically, the reactive group-containing resin (B-1) contains 3% to 100% by mass of a monomer unit having a reactive group, 0% to 3% by mass of an aromatic vinyl monomer unit, and 0% to 97% by mass of other monomer units, in a total of 100% by mass.

In a case where the reactive group-containing resin (B-1) contains a monomer unit having a reactive group to an amino group or a methylol group, the reactive group-containing resin (B-1) can be adhered to the melamine decorative board by a heating reaction in contact with a material including a methylol melamine and a derivative thereof, specifically, a melamine resin of a melamine decorative board or a precursor thereof.

Examples of the reactive group to an amino group or a methylol group include a hydroxyl group, a carboxyl group, an amino group, an amide group, an acid anhydride group, an imide group, and an epoxy group. The reactive group-containing resin (B-1) may have one kind of these reactive groups or may have two or more kinds thereof. In addition, two or more kinds of reactive group-containing resins (B-1) including one or more kinds of these reactive groups in different kinds and/or different ratios may be used in combination.

The reaction temperature of the reactive group varies depending on the presence or absence of a catalyst and a pH value in the reaction, and for example, 50°C to 200°C is preferable, and 110°C to 170°C is more preferable. Since the melamine decorative board is usually produced at a temperature of 110°C to 170°C, in a case where the reaction temperature is 110°C to 170°C, the multilayer film of the present invention is laminated with a melamine base material and heated, thereby enabling the multilayer film to be sufficiently adhered to the melamine base material at the same time as the production of the methacrylic-based resin composition.

Examples of the monomer having a reactive group include monomers having a hydroxyl group, such as hydroxyalkyl (meth)acrylate; monomers having a carboxyl group, such as (meth)acrylic acid, (meth)acryloyloxyalkylcarboxylic acid, and (meth)acryloyloxy aromatic carboxylic acid; monomers having an amino group, such as aminoalkyl (meth)acrylate; monomers having an amide group, such as alkylamide alkyl (meth)acrylate; acid anhydride monomers, such as maleic anhydride; maleimide monomers such as maleimide and alkylmaleimide; epoxy group-containing monomers such as glycidyl (meth)acrylate.

These may be used alone or in combination of two or more thereof.

Among these, from the viewpoint of adhesion, a monomer having a hydroxyl group, carboxyl group, acid anhydride group, or epoxy group as a reactive group is preferable.

In addition, from the viewpoint that a polymer can be efficiently produced in aqueous polymerization such as emulsion polymerization and suspension polymerization without a hydrolyzable moiety such as an acid anhydride, a monomer having a hydroxyl group, carboxyl group, or epoxy group as a reactive group is more preferable.

In addition, from the viewpoint of preventing cross-linking during melt molding, a monomer having a hydroxyl group as a reactive group is still more preferable.

In addition, from the viewpoint of particularly reducing cross-linking during melt molding, a monomer having a secondary hydroxyl group as a reactive group is particularly preferable.

Examples of the monomer having a hydroxyl group as a reactive group include 2-hydroxyethyl methacrylate, 2-hydroxypropyl methacrylate, 2-hydroxy-1-methylethyl methacrylate, 2-hydroxybutyl methacrylate, 2-hydroxyethyl acrylate, 2-hydroxyethyl acrylate, 2-hydroxyethyl acrylate, 2-hydroxypropyl acrylate, 2-hydroxy-1-methylethyl acrylate, and 2-hydroxybutyl acrylate.

In terms of preventing the film appearance from being poor due to a cross-linking reaction during melt molding, 2-hydroxypropyl methacrylate and 2-hydroxypropyl acrylate, which have a secondary hydroxyl group, are preferable.

In addition, for example, from the viewpoint of favorable copolymerizability with methyl methacrylate, 2-hydroxypropyl methacrylate is more preferable.

These may be used alone or in combination of two or more thereof.

The content of the monomer unit having a reactive group is 3% by mass or more with respect to 100% by mass of the reactive group-containing resin (B-1). From the viewpoint of adhesion and prevention of side reactions, the content of the monomer unit having a reactive group is preferably 3% by mass or more and 100% by mass or less, more preferably 3% by mass or more and 80% by mass or less, and still more preferably 10% by mass or more and 30% by mass or less.

In a case where the content is 3% by mass or more, the adhesion is more favorable.

In a case where the content is 80% by mass or less, 20% by mass or more of the non-reactive monomer is used in combination, and side reactions caused by reactive groups can be suppressed. This content is a value calculated from the charge-in amount of the raw material.

In addition, in a case where the monomer having a reactive group is watersoluble, the dissolution in water can be suppressed by using a water-insoluble monomer in combination, and aqueous polymerization such as emulsion polymerization or suspension polymerization enables the efficient production of a polymer.

In a case where the content of the reactive group is increased, the compatibility between the reactive group-containing resin (B-1), the core-shell rubber (B-2), and the thermoplastic polymer (B-3) is decreased. Accordingly, the appearance of the multilayer film may be deteriorated, or the haze value may increase. From the viewpoint of maintaining the appearance and the low haze value of the multilayer film, the smaller the amount of the reactive groups, the more preferable.

The content of the aromatic vinyl monomer unit is preferably 0% to 3% by mass with respect to 100% by mass of the reactive group-containing resin (B-1). In a case where the content is 3% by mass or less, the weather resistance of the obtained multilayer film and melamine decorative board is favorable.

The content is more preferably 0% to 1% by mass and still more preferably 0% to 0.1% by mass with respect to 100% by mass of the reactive group-containing resin (B-1). The content of the aromatic vinyl monomer unit is preferably small and may be 0% by mass.

Examples of the other monomers include acrylic monomers; cyanide vinyl monomers such as acrylonitrile; N-phenylmaleimide; N-cyclohexylmaleimide. These may be used alone or in combination of two or more thereof. From the viewpoint of compatibility with the core-shell rubber (B-2) and the thermoplastic polymer (B-3), adhesion to the resin layer (I), sticking of the multilayer film, and handleability of the multilayer film, the acrylic monomer is preferably, and methyl methacrylate and butyl acrylate are more preferable.

From the viewpoint of suppressing reaction such as cross-linking by reactive groups, the content of the other monomers is preferably 0% to 96% by mass and more preferably 20% to 96% by mass with respect to 100% by mass of the reactive group-containing resin (B-1). The content may be 0% by mass. In particular, in a case where methyl methacrylate and butyl acrylate are used in combination, methyl methacrylate is preferably 70% to 100% by mass and butyl acrylate is preferably 0% to 30%, and methyl methacrylate is more preferably 80% to 100% by mass and butyl acrylate is more preferably 0% to 20% with respect to 100% by mass of methyl methacrylate and butyl acrylate in total.

Various polymerization methods such as suspension polymerization, emulsion polymerization, mass polymerization, and solution polymerization can be used for producing the reactive group-containing resin (B-1). Provided that an acid anhydride or a monomer having an imide structure is used as the monomer having a reactive group, the production cannot be carried out by aqueous polymerization such as suspension polymerization or emulsion polymerization because hydrolysis occurs during polymerization.

During polymerization, a chain transfer agent, other polymerization aids, or the like may be used. As the chain transfer agent, mercaptans are preferable.

The glass-transition temperature (Tg) of the reactive group-containing resin (B-1) is preferably 60°C or higher and lower than 150°C, more preferably 60°C or higher and lower than 100°C, still more preferably 60°C or higher and 98°C or lower, even still more preferably 70°C or higher and 95°C or lower, and particularly preferably 75°C or higher and 90°C or lower.

In a case where Tg is 60°C or higher, the thermal resistance and water resistance of the melamine decorative board formed by using the multilayer film of the present invention are favorable, and in particular, the adhesion after a test in which the melamine decorative board is dipped into warm water at 65°C for 48 hours is favorable. In addition, sticking of the film and the raw material resin is eliminated, and the blocking properties are decreased. Thus, unwinding from the film roll is facilitated, the handleability is excellent, and appearance defects due to blocking traces are less likely to occur; thereby the multilayer film with an excellent appearance quality can be obtained. Furthermore, the resin layer (II) is less likely to be stretched out during molding, which is effective in crack prevention during molding.

In a case where Tg is lower than 150°C, the adhesion between melamine decorative board and the multilayer film is more favorable even though the press processing is performed at a lower temperature when the melamine decorative board is produced by lamination with the multilayer film of the present invention. That is, the processing conditions for producing the melamine decorative board formed by lamination with the multilayer film are eased. In addition, since the multilayer film of the present invention can be molded by melt-molding at a low temperature, the generation of contaminants in the resin due to heat deterioration is suppressed, and the film appearance is more favorable.

The Tg can be determined by Fox equation using a numerical value of Tg of a homopolymer of a component constituting the reactive group-containing resin (B-1). The Fox equation is shown below.

$$1/(273 + Tg) = \Sigma(wi/(273 + Tgi))$$

In the equation, Tg is the Tg (°C) of a copolymer (or a mixture thereof), wi is the mass fraction of a monomer i, and Tgi is the Tg (°C) of a homopolymer obtained by polymerization of the monomer i.

Here, as numerical values of the Tg of the homopolymer, numerical values described in POLYMER HANDBOOK THIRD EDITION (WILEY INTERSCIENCE) or values in a catalog of a monomer maker are used. In addition, in a case where the monomer contains a crosslinkable monomer, the Tg of the monomer excluding the crosslinkable monomer is determined.

[Core-shell Rubber (B-2)]

The core-shell rubber (B-2) may be any particle having a multilayer structure, and is preferably a rubber particle having a multilayer structure with two or more layers in which one layer containing a hard polymer as an outer layer is formed on the other layer containing an elastic copolymer as an inner layer.

Examples of materials of the core-shell rubber include acrylic rubber, silicone rubber, and butadiene rubber, and acrylic rubber is preferable from the viewpoint of transparency and weather resistance.

In a case where the core-shell rubber (B-2) is acrylic rubber, it is preferable to use an acrylic rubber particle having a multilayer structure formed of two or more layers in which a layer containing a hard polymer (a-2) as an outer layer having a structure formed of one layer or two or more layers obtained by graft polymerization of a monomer containing alkyl methacrylate as a main component is formed on a layer containing an elastic copolymer (a-1) as an inner layer having a structure formed of one layer or two or more layers obtained from alkyl (meth)acrylate as a main component.

In addition, the core-shell rubber (B-2) may include one or more layers including an intermediate polymer (a-3) between the layer containing the elastic copolymer (a-1) and the layer containing the hard polymer (a-2).

The content of the elastic copolymer (a-1) in the core-shell rubber (B-2) is preferably 10% to 90% by mass and more preferably 20% to 70% by mass from the viewpoint of crack prevention during molding of the melamine decorative board. The content of the hard polymer (a-2) in the core-shell rubber (B-2) is preferably 10% to 90% by mass and more preferably 30% to 70% by mass. The content of the intermediate polymer (a-3) in the core-shell rubber (B-2) is preferably 0% to 35% by mass and more preferably 0% to 20% by mass. In a case where the content of the intermediate polymer (a-3) is 35% by mass or less, the balance of the final polymer is favorable.

The elastic copolymer (a-1) is preferably a polymer obtained by polymerization of a monomer composition containing alkyl (meth)acrylate. (Meth)acrylate represents acrylate or methacrylate. The elastic copolymer (a-1) is more preferably a polymer obtained by polymerization of a monomer composition containing alkyl acrylate.

The monomer composition may further contain a monomer and a crosslinkable monomer other than alkyl (meth)acrylate. For example, the elastic copolymer (a-1) can contain 80% to 100% by mass of an alkyl acrylate having an alkyl group having 1 to 8 carbon atoms and an alkyl methacrylate having an alkyl group having 1 to 4 carbon atoms, 0% to 20% by mass of a monomer other than alkyl (meth)acrylate, and 0% to 10% by mass of an crosslinkable monomer (100% by mass in total).

As the alkyl acrylate having an alkyl group having 1 to 8 carbon atoms, for example, methyl acrylate, ethyl acrylate, propyl acrylate, butyl acrylate, 2-ethylhexyl acrylate, and n-octyl acrylate are preferable, and an alkyl acrylate having a low Tg is more preferable. These may be used alone or in combination of two or more thereof.

The alkyl acrylate is used as a main component of the monomer constituting the elastic copolymer (a-1). Specifically, the use amount of the alkyl acrylate is preferably 30% to 99.9% by mass with respect to all monomers constituting the elastic copolymer (a-1). In a case where the use amount is 30% by mass or more, the moldability of the film is more favorable. The use amount is more preferably 50% to 95% by mass.

In a case where the elastic copolymer (a-1) has a structure formed of two or more layers, a range of the use amount indicates the use amount of the alkyl acrylate as the entire elastic copolymer (a-1). For example, in a case where the elastic copolymer (a-1) is made into a hard core structure, the use amount of the alkyl acrylate in a first layer (core part) can also be less than 30% by mass.

Examples of alkyl methacrylate having an alkyl group having 1 to 4 carbon atoms include methyl methacrylate, ethyl methacrylate, propyl methacrylate, and butyl methacrylate. These may be used alone or in combination of two or more thereof. The use amount of the alkyl methacrylate is preferably 0% to 69.9% by mass and more preferably 0% to 40% by mass with respect to all monomers constituting the elastic copolymer (a-1).

Examples of the monomer other than the alkyl (meth)acrylate include other vinyl monomers copolymerizable with the alkyl (meth)acrylate. Examples of the monomer other than the alkyl (meth)acrylate include styrene and acrylonitrile. These may be used alone or in combination of two or more thereof. In a case where a monomer other than the alkyl (meth)acrylate is used, the use amount thereof is preferably 0% to 69.9% by mass and more preferably 0% to 20% by mass with respect to all monomers constituting the elastic copolymer (a-1).

Examples of the crosslinkable monomer include ethylene glycol dimethacrylate, 1,3-butylene glycol dimethacrylate, 1,4-butylene glycol dimethacrylate, propylene glycol dimethacrylate, and a graft cross-linking agent. These may be used alone or in combination of two or more thereof. The use amount of the crosslinkable monomer is preferably 0.1% to 10% by mass and more preferably 0.5% to 5% by mass with respect to all monomers constituting the elastic copolymer (a-1). From the viewpoint of particle generation stability of the core-shell rubber (B-2), it is preferable to use a graft cross-linking agent as the crosslinkable monomer.

Examples of the graft cross-linking agent include allyl ester, methallyl ester, or crotyl ester of $\alpha,\beta$-unsaturated carboxylic acid or unsaturated dicarboxylic acid; triallyl cyanurate; triallyl isocyanurate. Among these, allyl esters such as acrylic acid, methacrylic acid, maleic acid, and fumaric acid are preferable, and allyl methacrylate is more preferable because of an excellent effect.

In such a graft cross-linking agent, the conjugated unsaturated bond of the ester is reacted much earlier than an allyl group, a methallyl group, or a crotyl group, and bonded chemically. Thus, most of the slowly reacting allyl group, methallyl group, or crotyl group act effectively during the polymerization of a polymer in the next layer and provide a graft bond between two adjacent layers.

The glass-transition temperature (Tg) of the elastic copolymer (a-1) is preferably -100°C or higher and lower than 20°C, more preferably -80°C or higher and lower than 10°C, still more preferably -70°C or higher and lower than 0°C, and particularly preferably -60°C or higher and lower than 0°C. In a case where Tg is -100°C or higher, the resin layer (II) during molding or the resin layer (III) described later is less likely to be stretched out, which is advantageous in crack prevention during molding. In a case where Tg is less than 20°C, toughness can be imparted to the multilayer film of the present invention, resulting in the more favorable film formation properties.

Tg can be determined by the above-described method.

Prior to the polymerization of the elastic copolymer (a-1), a core part having a Tg of greater than 0°C may be polymerized. The core part is preferably 0% to 10% by mass in the core-shell rubber (B-2) in terms of stability of generating polymer particles. The core part is preferably obtained by polymerization of monomers containing 10% to 50% by mass of the alkyl acrylate having an alkyl group having 1 to 8 carbon atoms, 20% to 70% by mass of the alkyl methacrylate having an alkyl group having 1 to 4 carbon atoms, 0% to 10% by mass of the other vinyl monomers, and 0.1% to 10% by mass of the crosslinkable monomer.

The hard polymer (a-2) is preferably a polymer obtained by polymerization of a monomer other than the alkyl methacrylate, the alkyl acrylate, and the alkyl (meth)acrylate. For example, the hard polymer (a-2) is obtained by polymerization of a monomer consisting of 51% to 100% by mass of the alkyl methacrylate having an alkyl group having 1 to 4 carbon atoms and the alkyl acrylate having an alkyl group having 1 to 8 carbon atoms, or a monomer consisting of 0% to 49% by mass other than alkyl (meth)acrylate, in the presence of the elastic copolymer (a-1). As a monomer other than the alkyl methacrylate having an alkyl group having 1 to 4 carbon atoms, the alkyl acrylate having an alkyl group having 1 to 8 carbon atoms, and the alkyl (meth)acrylate, the same monomers as the monomers used in the polymerization of the elastic copolymer (a-1) can be used.

The glass-transition temperature (Tg) of the hard polymer (a-2) is preferably 60°C or higher and lower than 150°C, more preferably 60°C or higher and lower than 140°C, still more preferably 60°C or higher and 130°C or lower, even still more preferably 70°C or higher and 120°C or lower, and particularly preferably 75°C or higher and 110°C or lower. In a case where Tg is 60°C or higher, the resin layer (II) during molding or a resin layer (III) described later is less likely to be stretched out, which is advantageous in crack prevention during molding. In a case where Tg is lower than 150°C, since the multilayer film of the present invention can be molded by melt-molding at a low temperature, the generation of contaminants in the resin due to heat deterioration is suppressed, and the film appearance is more favorable.

Tg can be determined by the above-described method.

As the intermediate polymer (a-3), a polymer, which is obtained by polymerization of a monomer other than the alkyl acrylate, the alkyl methacrylate, or the alkyl (meth)acrylate, and a monomer composition containing a crosslinkable monomer, is preferable. As the intermediate polymer (a-3), a polymer, which is obtained by polymerization of a monomer other than the alkyl acrylate having an alkyl group having 1 to 8 carbon atoms, the alkyl methacrylate having an alkyl group having 1 to 4 carbon atoms, or the alkyl (meth)acrylate, and a monomer composition containing a crosslinkable monomer, is more preferable. For example, the intermediate polymer (a-3) can contain 10% to 90% by mass of an alkyl acrylate having an alkyl group having 1 to 8 carbon atoms, 90% to 10% by mass of the alkyl methacrylate having an alkyl group having 1 to 4 carbon atoms, 0% to 20% by mass of a monomer other than alkyl (meth)acrylate, and 0% to 10% by mass of the crosslinkable monomer (100% by mass in total).

As each monomer used in the intermediate polymer (a-3), the same monomer as the monomer used for the polymerization of the elastic copolymer (a-1) can be used. In addition, the content (monomer constitutional ratio) of alkyl acrylate in the intermediate polymer (a-3) is preferably lower than the content of alkyl acrylate in the elastic copolymer (a-1), and preferably higher than the content of the alkyl acrylate in the hard polymer (a-2).

The average particle diameter of the core-shell rubber (B-2) is preferably 0.01 to 0.5 μm and more preferably 0.08 to 0.3 μm. In particular, from the viewpoint of the film formation properties, the average particle diameter is preferably 0.08 μm or more. The average particle diameter is a value measured by a method described later.

A production method for the core-shell rubber (B-2) is not particularly limited. As a production method for the elastic copolymer (a-1) and the hard polymer (a-2), for example, an emulsion polymerization method can be used. In addition, the elastic copolymer (a-1) and the hard polymer (a-2) can be produced by the emulsion suspension polymerization in which after the emulsion polymerization, a polymer constituting the outermost layer is converted into a suspension polymerization system during the polymerization. The polymerization temperature is appropriately selected according to the kind and amount of a polymerization initiator to be used, but 40°C to 120°C is preferable, and 60°C to 95°C is more preferable. Known polymerization initiators can be used as the polymerization initiator. The polymerization initiator can be added to any one or both of an aqueous phase and a monomer phase.

Examples of an emulsifier that can be used in the emulsion polymerization method include anionic, cationic, and nonionic surfactants, where the anionic surfactant is preferable. Examples of the anionic surfactants include carboxylate surfactants such as potassium oleate, sodium stearate, sodium myristate, sodium N-lauroyl sarcosinate, and dipotassium alkenyl succinate; sulfate ester salt surfactants such as sodium lauryl sulfate; sulfonate surfactants such as sodium dioctyl sulfosuccinate, sodium dodecylbenzenesulfonate, and sodium alkyldiphenyl ether disulfonate; and phosphate salt surfactants such as polyoxyethylene alkylphenyl ether sodium phosphate. These may be used alone or in combination of two or more thereof.

A polymer latex obtained by the emulsion polymerization can be filtered through, for example, a filter having an opening of 100 μm or less and then separated and recovered by methods such as an acid coagulation method, a salt coagulation method, a freeze-coagulation method, and a spray drying method. In the acid coagulation method, inorganic acids such as sulfuric acid, hydrochloric acid, and phosphoric acid, and organic acids such as acetic acid can be used. In the salt coagulation method, inorganic salts such as sodium sulfate, magnesium sulfate, aluminum sulfate, and calcium chloride, and organic salts such as calcium acetate and magnesium acetate can be used. These may be used alone or in combination of two or more thereof. The core-shell rubber (B-2) is obtained by further performing washing, dehydration, drying, or the like on the separated and recovered polymer.

[Thermoplastic Polymer (B-3)]

The thermoplastic polymer (B-3) may be any polymer other than the reactive group-containing resin (B-1) and the core-shell rubber (B-2), and is preferably a polymer obtained by polymerization of a monomer containing alkyl methacrylate as a main component.

The thermoplastic polymer (B-3) is more preferably a polymer obtained by polymerization of a monomer other than the alkyl methacrylate, the alkyl acrylate, and the alkyl (meth)acrylate. For example, as the thermoplastic polymer (B-3), it is possible to use a polymer obtained by polymerization of 50% to 99.9% by mass of alkyl methacrylate having an alkyl group having 1 to 4 carbon atoms, 0.1% to 50% by mass of alkyl acrylate, and 0% to 49.9% by mass of a monomer other than alkyl (meth)acrylate, in a total of 100% by mass.

Examples of the alkyl methacrylate include methyl methacrylate, ethyl methacrylate, and butyl methacrylate, and methyl methacrylate is preferable. These may be used alone or in combination of two or more thereof.

Examples of the alkyl acrylate include methyl acrylate, ethyl acrylate, and butyl acrylate. These may be used alone or in combination of two or more thereof.

Examples of the monomer other than the alkyl (meth)acrylate include aromatic vinyl monomers such as styrene; cyanide vinyl monomers such as acrylonitrile; and unsaturated dicarboxylic acid anhydrides such as maleic anhydride and itaconic anhydride; N-phenylmaleimide; N-cyclohexylmaleimide. These may be used alone or in combination of two or more thereof.

The production method for the thermoplastic polymer (B-3) is not particularly limited, and for example, various polymerization methods such as suspension polymerization, emulsion polymerization, and mass polymerization can be used. During the polymerization, chain transfer agents, other polymerization aids, and the like may be used. The chain transfer agent is not particularly limited, but mercaptans are preferable.

The mass-average molecular weight of the thermoplastic polymer (B-3) is preferably 300,000 or less from the viewpoint that appropriate elongation is caused when the film raw resin is melted, and the film formation properties are favorable. In addition, the mass-average molecular weight is preferably 10,000 or more from the viewpoint that film breakage is less likely to occur during the film formation and handling since the film is not brittle. For example, the weight-average molecular weight is preferably 10,000 to 300,000. The mass-average molecular weight is a value measured by a method described later.

The glass-transition temperature (Tg) of the thermoplastic polymer (B-3) is preferably 60°C or higher and lower than 150°C, more preferably 60°C or higher and lower than 140°C, still more preferably 60°C or higher and 130°C or lower, even still more preferably 70°C or higher and 120°C or lower, and particularly preferably 75°C or higher and 110°C or lower.

In a case where Tg is 60°C or higher, the resin layer (II) during molding or a resin layer (III) described later is less likely to be stretched out, which is advantageous in crack prevention during molding.

In a case where Tg is lower than 150°C, since the multilayer film of the present invention can be molded by melt-molding at a low temperature, the generation of contaminants in the resin due to heat deterioration is suppressed, and the film appearance is more favorable.

Tg can be determined by the above-described method.

In a case where the thermoplastic polymer (B-3) is used, the content of the thermoplastic polymer (B-3) is preferably 0.1 parts by mass or more and 10 parts by mass or less, more preferably 1 part by mass or more and 5 parts by mass or less, and still more preferably 1.5 parts by mass or more and 4 parts by mass or less with respect to a total mass of the resin composition (b).

[Additive (B-4)]

The additive (B-4) is a compound other than the reactive group-containing resin (B-1), the core-shell rubber (B-2), and the thermoplastic polymer (B-3), and examples thereof include stabilizers, lubricants, plasticizers, foaming agents, fillers, colorants, and ultraviolet absorbers.

For example, from the viewpoint of imparting weather resistance to protect the substrate, an ultraviolet absorber may be contained as the additive (B-4).

The molecular weight of the ultraviolet absorber is preferably 300 or more and more preferably 400 or more. In a case where the molecular weight is 300 or more, bleeding-out of the ultraviolet absorber in the multilayer film is reduced.

As the ultraviolet absorber, a benzotriazole ultraviolet absorber having a molecular weight of 400 or more, and a triazine ultraviolet absorber having a molecular weight of 400 or more are preferable. From the viewpoint of maintaining the ultraviolet shielding ability for a long period of time, a triazine ultraviolet absorber having a molecular weight of 400 or more is more preferable.

Examples of commercially available products of the benzotriazole ultraviolet absorber having a molecular weight of 400 or more include "Tinuvin 234" (trade name, manufactured by BASF Japan); "ADK STAB LA-31" (trade name, manufactured by ADEKA Corporation).

Examples of commercially available products of the triazine ultraviolet absorber having a molecular weight of 400 or more include "Tinuvin 1577" (trade name, manufactured by BASF Japan).

These may be used alone or in combination of two or more thereof.

From the viewpoint of weather resistance, the amount of the ultraviolet absorber added is preferably 0 parts by mass or more and 20 parts by mass or less with respect to 100 parts by mass of the reactive group-containing resin (B-1) and the core-shell rubber (B-2) in total. In addition, from the viewpoint of preventing metal mold contamination during molding or preventing bleeding-out, 1 part by mass or more and 5 parts by mass or less is more preferable.

In addition, from the viewpoint of further improving weather resistance, a radical capture agent such as a hindered amine light stabilizer may be used in combination with the ultraviolet absorber.

Examples of commercially available products of the radical capture agent include "ADK STAB LA-57", "ADK STAB LA-62", "ADK STAB LA-67", "ADK STAB LA-63", and "ADK STAB LA-68" (all of which are trade names, manufactured by ADEKA Corporation); "Sanol LS-770", "Sanol LS-765", "Sanol LS-292", "Sanol LS-2626", "Sanol LS-1114", and "Sanol LS-744" (all of which are trade names, manufactured by DAIICHI SANKYO COMPANY, LIMITED.).

These may be used alone or in combination of two or more thereof.

In addition, as the radical capture agent such as the hindered amine light stabilizer, a hindered amine stabilizer having a high molecular weight can also be used from the viewpoint of bleeding-out resistance. The molecular weight of the hindered amine stabilizer is preferably 1,000 or more and more preferably 2,000 or more.

Examples of the hindered amine stabilizer having a molecular weight of 2000 or more include "Chimassorb 2020" and "Chimassorb 944" (all of which are trade names, manufactured by BASF Japan).

From the viewpoint of bleeding-out resistance, the amount of the radical capture agent added is preferably 0 to 10 parts by mass and more preferably 0.2 to 5 parts by mass with respect to 100 parts by mass of the reactive group-containing resin (B-1) and the core-shell rubber (B-2) in total.

In addition, an anti-blocking agent may be contained as the additive (B-4) in terms of supporting the blocking prevention effect. Examples of the anti-blocking agent include silica particles.

Examples of the commercially available products of the anti-blocking agent include "AEROSIL R976" (manufactured by Nippon Aerosil Co., Ltd.).

The amount of the anti-blocking agent added is preferably 0 parts by mass or more and more preferably 0.01 parts by mass or more with respect to 100 parts by mass of the reactive group-containing resin (B-1) and the core-shell rubber (B-2) in total. On the other hand, less than 2 parts by mass is preferable, and less than 1.5 parts by mass is more preferable. The above upper limit and lower limit can be optionally combined. For example, 0 to 2 parts by mass is preferable, and 0.01 to 1.5 parts by mass is more preferable.

In a case where the amount of the anti-blocking agent added is 0.01 parts by mass or more, a sufficient anti-blocking effect can be exhibited. In a case of 0.5 parts by mass or less, the deterioration of the transparency of the obtained multilayer film can be suppressed, and the occurrence of fisheyes can be reduced.

In addition, in terms of preventing adhesion to press board when producing the melamine decorative board by heat-pressure molding, a release agent may be contained as the additive (B-4).

Examples of the release agent include a silicone-based compound, a fluorine-based compound, an alkyl alcohol, and an alkylcarboxylic acid. Among these, the alkylcarboxylic acid is preferable from the viewpoint of ease of availability and economic efficiency.

Examples of the alkylcarboxylic acid include linoleic acid, baxenic acid, stearic acid, oleic acid, margaric acid, palmitoleic acid, palmitic acid, and pentadecyl acid. These may be used alone or in combination of two or more thereof.

In terms of preventing adhesion to press board, the amount of the release agent added is preferably 0.01 parts by mass or more and more preferably 0.1 parts by mass or more with respect to 100 parts by mass of the reactive group-containing resin (B-1) and the core-shell rubber (B-2) in total. On the other hand, 2 parts by mass or less is preferable, and 0.5 parts by mass or less is more preferable. The above upper limit and lower limit can be optionally combined. For example, 0.01 to 2 parts by mass is preferable, and 0.1 to 0.5 parts by mass is more preferable.

[Resin Layer (III)]

In a case where the multilayer film of the present invention is a multilayer film formed of three layers or four or more layers, the resin layer (III) may be further provided between the resin layer (I) and the resin layer (II). As described above, in this case, the resin layer (III) corresponds to the layer (X). Therefore, the resin layer (III) contains an acrylic resin. The resin layer (III) has a storage elastic modulus E' of 10 MPa or more and 2,000 MPa or less at a measurement temperature of 100°C and a frequency of 0.1 Hz. The above-described preferable range for the storage elastic modulus E' of the layer (X) can be applied to a storage elastic modulus E' of the resin layer (III).

In a case where the multilayer film of the present invention is used as a protective film for a melamine decorative board and a case where the multilayer film of the present invention is a film formed of three layers, the resin layer (II) is disposed on the melamine decorative board, and the resin layer (I) is preferably disposed on the resin layer (III), which is disposed on the resin layer (II), that is, on the layer (X). In a case where the multilayer film of the present invention is a multilayer film formed of four or more layers, the other layer that is neither resin layer (I), resin layer (II), nor resin layer (III) is preferably disposed between the resin layer (II) and the resin layer (III) (that is, the layer (X)).

The resin layer (III) is an intermediate layer in the multilayer film of the present invention, which is in contact with the resin layer (I).

The acrylic resin in the resin layer (III) is not particularly limited as long as it does not contain the reactive group-containing resin (B-1), and for example, the same acrylic resin described as that described in Thermoplastic Polymer (B-3) can be used.

The resin layer (III) of the present invention preferably contains a core-shell rubber (C-1) from the viewpoint of film productivity and handleability, and preferably contains a thermoplastic polymer (C-2) and an additive (C-3) in addition to the core-shell rubber (C-1). In a case where the thermoplastic polymer (C-2) is contained, the tensile elongation at break of the resin layer (III) is decreased, and the resin layer (I) is not stretched. Thus, cracks during molding can be prevented.

In particular, the resin layer (III) preferably contains 1% to 99% by mass of the core-shell rubber (C-1) and 1% to 99% by mass of the thermoplastic polymer (C-2) with respect to 100% by mass of the core-shell rubber (C-1) and the thermoplastic polymer (C-2) in total, and furthermore, 0 to 20 parts by mass of the additive (C-3) with respect to 100 parts by mass of the core-shell rubber (C-1) and the thermoplastic polymer (C-2) in total.

In addition, the resin layer (III) more preferably contains 3% to 98% by mass of the core-shell rubber (C-1) and 2% to 97% by mass of the thermoplastic polymer (C-2) with respect to 100% by mass of the core-shell rubber (C-1) and the thermoplastic polymer (C-2) in total, and furthermore, 0.1 to 10 parts by mass of the additive (C-3) with respect to 100 parts by mass of the core-shell rubber (C-1) and the thermoplastic polymer (C-2) in total.

The resin layer (III) still more preferably contains 5% to 80% by mass of the core-shell rubber (C-1) and 20% to 95% by mass of the thermoplastic polymer (C-2) with respect to 100% by mass of the core-shell rubber (C-1) and the thermoplastic polymer (C-2) in total, and furthermore, 1 to 5 parts by mass of the additive (C-3) with respect to 100 parts by mass of the core-shell rubber (C-1) and the thermoplastic polymer (C-2) in total.

In a case where the content of the core-shell rubber (C-1) is 1% by mass or more, toughness is further imparted to the resin layer (III), film breakage is less likely to occur during the production of the multilayer film, and the productivity is favorable. In addition, the handleability when using the multilayer film is favorable.

In a case where the content of the thermoplastic polymer (C-2) is 1% by mass or more, the surface hardness of the multilayer film of the present invention is favorable, which is advantageous from the viewpoint of preventing cracks occurring during molding into the melamine decorative board.

In addition, from the viewpoint of transparency, the resin layer (III) preferably contains less than 2 parts by mass of silica particles, more preferably contains less than 1.5 parts by mass, and still more preferably contains less than 1.0 part by mass with respect to a total mass of the resin layer (III).

The gel fraction in the constituent components of the resin layer (III) is preferably 5% to 80%. As the gel fraction is higher, the toughness of the film is improved, and the handleability and film formation properties of the multilayer film are improved. In addition, as the gel fraction is lower, the generation of contaminants in the resin due to heat deterioration is suppressed, and the film appearance is favorable. Furthermore, as the gel fraction is lower, the tensile elongation at break of the resin layer (III) is smaller, and the resin layer (I) is thus not stretched during molding, thereby preventing cracking. In a case where the gel fraction is 5% to 80%, it is possible to achieve film toughness, film appearance, and crack prevention during molding. The gel fraction is more preferably 5% to 75%, still more preferably 5% to 70%, and particularly preferably 5% to 60%. The gel fraction can be set to a desired range by, for example, the adjustment of the addition amount of the core-shell rubber contained in the resin layer (III).

[Core-shell Rubber (C-1)]

The core-shell rubber (C-1) may be any particle having a multilayer structure, and is preferably a rubber particle having a multilayer structure with two or more layers in which one layer containing a hard polymer as an outer layer is formed on the other layer containing an elastic copolymer as an inner layer.
Examples of materials of the core-shell rubber include acrylic rubber, silicone rubber, and butadiene rubber, and acrylic rubber is preferable from the viewpoint of transparency and weather resistance. As the acrylic rubber, the same acrylic rubber as that described in Core-shell Rubber (B-2) can be used.

[Thermoplastic Polymer (C-2)]

The thermoplastic polymer (C-2) is a thermoplastic polymer other than the core-shell rubber (C-1) and preferably a polymer obtained by polymerization of a monomer containing alkyl methacrylate as a main component.
Examples of the thermoplastic polymer (C-2) include the thermoplastic polymer described in the thermoplastic polymer (B-3) or a polymer-based processing aid.

[Additive (C-3)]

As the additive (C-3), the same additive as that in Additive (B-4) can be used.

[Production Method for Multilayer Film]

A production method for the multilayer film of the present invention includes producing a film including a first layer formed from a resin composition (b) containing a core-shell rubber, and applying a resin composition (a) containing an active energy ray-curable resin on the film including the first layer and curing the resin composition (a) to produce a second layer, and the second layer has a thickness of 35 μm or less (hereinbelow, referred to as a first aspect).
In addition, another aspect of a production method for the multilayer film of the present invention includes producing a film including a first layer formed of a resin composition (b) containing a core-shell rubber and a reactive group-containing resin, and applying a resin composition (a) containing an active energy ray-curable resin on the film including the first layer and curing the resin composition (a) to produce a second layer (hereinbelow, referred to as a second aspect).
The above-described first aspect and second aspect may be methods of producing a multilayer film of the present invention.

[Resin Composition (b)]

In the first aspect and second aspect, the resin composition (b) contains a core-shell rubber.
As the core-shell rubber, the same acrylic rubber as that described in Core-shell Rubber (B-2) can be used.
In the second aspect, the resin composition (b) further contains a reactive group-containing resin. In the first aspect, the resin composition (b) may further contain a reactive group-containing resin.
The reactive group-containing resin contains a monomer unit having a reactive group, and preferably contains a monomer unit having a reactive group to an amino group or a methylol group.
As the reactive group-containing resin, the same reactive group-containing resin as that described in Reactive Group-containing Resin (B-1) can be used.
The resin composition (b) in each of the first aspect and the second aspect may contain another acrylic resin in addition to the reactive group-containing resin. As the other acrylic resin, the same acrylic resin as that described in Thermoplastic Polymer (B-3) can be used.
The resin composition (b) in the first aspect and the second aspect may further contain an additive described in the additive (B-4).

[Film Including First Layer Formed from Resin Composition (b)]

The resin composition (b) that forms the first layer contains a core-shell rubber in the first aspect and contains a core-shell rubber and a reactive group-containing resin in the second aspect. As an example, the first layer formed from the resin composition (b) in the second aspect may be the resin layer (II) of the multilayer film of the present invention; and the first layer formed from the resin composition (b) in the first aspect may be the resin layer (II) of the multilayer film of the present invention.
In a case where the multilayer film produced by the production method of the present invention is a film formed of two layers, the film including the first layer formed from the resin composition (b) includes only the first layer. In addition, in this case, the first layer may be the resin layer (II) of the multilayer film of the present invention.

In a case where the multilayer film produced by the production method of the present invention is a multilayer film formed of three layers or four or more layers, the film including the first layer formed from the resin composition (b) may be a film further including a layer other than the first layer. In addition, in this case, the first layer may be the resin layer (II) of the multilayer film of the present invention.

In a case where the multilayer film produced by the production method of the present invention is a multilayer film formed of three layers or four or more layers, and the first layer is the resin layer (II) of the multilayer film of the present invention, the layer other than the first layer may be the resin layer (III) of the multilayer film of the present invention. This resin layer (III) is preferably formed from a resin composition containing no reactive group-containing resin.

For the formation of the first layer with the resin composition (b), a conventional method can be used, and for example, a melt extrusion method, a co-extruding method via a feed block die or a multi-manifold die can be used. It is preferable to use the melt extrusion method.

In addition, in a case where the film containing the first layer formed from the resin composition (b) contains a layer other than the first layer, for example, a lamination structure of the resin layer (II) and the resin layer (III) can be formed by the co-extruding method via the feed block die or the multi-manifold die. Furthermore, for example, each of the resin layer (II) and the resin layer (III) can be molded into a film shape by the melt extrusion method using a T-die, and the two types of films can be laminated by a heat lamination method. In addition, an extrusion lamination method of forming one resin layer into a film shape and then laminating the other resin layer by the melt extrusion method can also be used. It is preferable to use the melt extrusion method.

In a case where the melt extrusion is performed, in order to remove nuclei and impurities which cause surface defects, the resin composition in a melt state can be extruded through 200 screen meshes or more while filtering.

The resin layer (II) and the resin layer (III) (both may correspond to the layer (X)) in the multilayer film of the present invention can be formed by the above-described method.

[Resin Composition (a)]

In the first aspect and the second aspect, the resin composition (a) contains an active energy ray-curable resin.

As the active energy ray-curable resin, the same active energy ray-curable resin as that described in Active Energy Ray-curable Resin (A-1) can be used.

The resin composition (a) may contain another resin in addition to the active energy ray-curable resin (A-1). As the other resin, the same resin as that described in Thermosetting Resin (A-2) can be used.

The resin composition (a) may further contain an additive described in Additive (B-4). In addition, the resin composition (a) may contain a filler containing the inorganic oxide particles and the surface-modified particles described above.

[Second Layer]

The resin composition (a) contains an active energy ray-curable resin. As an example, the second layer formed by application of the resin composition (a) and curing may be the resin layer (I) of the multilayer film of the present invention.

The formation of the second layer with the resin composition (a) is performed by application of the resin composition (a) on the film including the first layer formed from the resin composition (b), and curing.

In the application of the resin composition (a), it is preferable to use a method of applying the resin composition (a) (may be diluted with an organic solvent or the like as necessary) and laminating the resin layer (I), which is the second layer, onto the film including a first layer formed from the resin composition (b). The same application method as that described in Patent Document 3 may be mentioned.

In a case where the film including the first layer formed from the resin composition (b) is a single-layer film including only the first layer, the resin composition (a) may be applied onto any surface of the film. In a case where the film containing the first layer formed from the resin composition (b) is formed with a plurality of layers, the resin composition (a) is preferably applied onto a surface of a layer that does not contain the reactive group-containing resin, or a layer positioned on an opposite side (the layer may also be a layer containing a reactive group-containing resin) to a layer that contains the reactive group-containing resin.

Since the resin composition (a) contains the active energy ray-curable resin (A-1), the resin composition (a) can be applied onto the film including the first layer formed from the resin composition (b) and then cured by actinic energy rays. From the viewpoint of the embossing imparting properties, the resin composition (b) may be cured at the same time as the curing of the melamine decorative board described later.

In the first aspect, the thickness of the second layer is 35 μm or less. The thickness of the second layer in the first aspect is preferably 1 μm or more, more preferably 5 μm or more, and still more preferably 10 μm or more. On the other hand, the thickness is 35 μm or less, preferably 30 μm or less, more preferably 25 μm or less, and particularly preferably 15 μm or less. The above upper limit and lower limit can be optionally combined. For example, the thickness is preferably 1 to 35 μm, more preferably 5 to 30 μm, even more preferably 10 to 25 μm, and particularly preferably 10 to 15 μm.

In addition, the thickness of the second layer in each of the second aspect and the third aspect described later and the thickness of the resin layer (I) in the multilayer film of the present invention is not particularly limited, but the thicknesses may be the same as the thickness of the second layer of the first aspect. Alternatively, the thickness is preferably 1 μm or more, more preferably 5 μm or more, and still more preferably 10 μm or more. On the other hand, the thickness is preferably less than 30 μm, more preferably 25 μm or less, still more preferably 20 μm or less, and particularly preferably 15 μm or less. The above upper limit and lower limit can be optionally combined. For example, the thickness is preferably 1 to 30 μm, more preferably 5 to 25 μm, even more preferably 10 to 20 μm, and particularly preferably 10 to 15 μm. In a case where the thickness is 1 μm or more, the surface hardness and embossing imparting properties of the multilayer film are favorable. In addition, in a case where the thickness is less than 30 μm, the multilayer film has appropriate flexibility. Therefore, cracks can be prevented during molding of the melamine decorative board or cutting of the obtained melamine decorative board. In addition, it is economically advantageous in terms of the mass per unit area. Furthermore, the film formation properties are improved, resulting in facilitating the production of the multilayer film. Furthermore, in a case of lamination on the melamine decorative board, the surface hardness of the decorative board increases, thereby improving the flaw resistance.

The thickness of the first layer in a case where the first layer contains the reactive group-containing resin and the thickness of the resin layer (II) in the multilayer film of the present invention are not particularly limited, but each thickness is preferably 0.5 μm or more, more preferably 2 μm or more, and still more preferably 3 μm or more. On the other hand, the thickness is preferably 100 μm or less, preferably 75 μm or less, and still more preferably 50 μm or less. The above upper limit and lower limit can be optionally combined. For example, the thickness is preferably 0.5 to 100 μm, more preferably 2 to 75 μm, and still more preferably 3 to 50 μm. In a case where the thickness is 0.5 μm or more, the adhesion of the multilayer film to the melamine decorative board is favorable. In addition, a case where the thickness is 100 μm or less is economically advantageous in terms of mass per unit area.

The thickness of the first layer in a case where the first layer does not contain the reactive group-containing resin and the thickness of the resin layer (III) in the multilayer film of the present invention is not particularly limited, but each thickness is preferably 1 μm or more, more preferably 20 μm or more, and still more preferably 30 μm or more. On the other hand, the thickness is preferably 100 μm or less, preferably 75 μm or less, and still more preferably 50 μm or less. The above upper limit and lower limit can be optionally combined. For example, the thickness is preferably 1 to 100 μm, more preferably 20 to 75 μm, and still more preferably 30 to 50 μm. In a case where the thickness is 1 μm or more, the surface hardness of the multilayer film is favorable. In addition, in a case where the thickness is 100 μm or less, the multilayer film has appropriate flexibility. Therefore, the obtained melamine decorative board can be prevented from cracking during the cutting. In addition, it is economically advantageous in terms of the mass per unit area. Furthermore, the film formation properties are stabilized, resulting in facilitating the production of the multilayer film. Furthermore, in a case of lamination on the melamine decorative board, the surface hardness of the decorative board increases, thereby improving the flaw resistance.

The thickness of the multilayer film produced by the production method of the present invention and the thickness of the multilayer film of the present invention are not particularly limited, but each thickness is preferably 2.5 μm or more, more preferably 27 μm or more, and still more preferably 43 μm or more. On the other hand, the thickness is preferably 235 μm or less, preferably 180 μm or less, and still more preferably 125 μm or less. The above upper limit and lower limit can be optionally combined. For example, the thickness is preferably 2.5 to 235 μm, more preferably 27 to 180 μm, and still more preferably 43 to 125 μm.

Each of the tensile elongation at break of the multilayer film produced by the production method of the present invention and the tensile elongation at break of the multilayer film of the present invention is preferably 1% or more and more preferably 3% or more. In a case where the tensile elongation at break is 1% or more, the resin layer (I) does not have a resistance to extension and cracks can be prevented from occurring when subjected to heat-pressure molding during the production of the melamine decorative board described later. From the viewpoint of reducing the residual stress in the multilayer film after molding, 1000% or less is preferable, 500% or less is more preferable, and 200% or less is still more preferable. The above upper limit and lower limit can be optionally combined. For example, 1% to 1000% is preferable, 3% to 1000% is more preferable, 3% to 500% or less still more preferable, and 3% to 200% or less is particularly preferable.

[Protective Film for Melamine Decorative Board and Melamine Decorative Board]

The melamine decorative board is used on a horizontal surface of a desk, a counter, or the like and on a vertical surface such as a wall, and a configuration and production method thereof are described in detail in Decorative Board Handbook (published by New Materials Laboratory, published in 1948) and the like. The melamine decorative board can be obtained by, as follows: laminating melamine resin-impregnated paper, which is produced by impregnating decorative paper for a decorative board with a melamine resin and drying the paper, with resin-impregnated core paper, which is a core material layer; furthermore, as necessary, laminating melamine resin-impregnated overlay paper, which is produced by impregnating overlay paper with a melamine resin and drying the paper for the purpose of protecting a pattern of decorative paper, with balanced paper on the bottom layer for the purpose of preventing warping; and carrying out heat-pressure molding.

As the melamine resin-impregnated paper, for example, resin-impregnated paper produced by impregnating decorative paper for a decorative board with a melamine-formaldehyde resin and drying the paper can be used. As the resin-impregnated core paper, for example, core paper for a decorative board produced by impregnating Kraft paper, nonwoven fabric, woven fabric, or the like with a slurry containing a phenolformaldehyde resin, a melamine-formaldehyde resin, or a resin liquid composed of a mixture of these resins as a main component and an inorganic filler containing aluminum hydroxide, calcium carbonate, or the like, and drying the paper can be used. The heat-pressure molding can be carried out, for example, by laminating resin-impregnated core paper and melamine resin-impregnated paper (melamine base material) with the multilayer film of the present invention under the conditions of a temperature of 110°C or higher and 170°C or lower, a pressure of 5 MPa or higher and 10 MPa or lower, and a time of 10 minutes or more and 90 minutes or less.

The protective film for a melamine decorative board of the present invention is provided with the multilayer film of the present invention. Since the multilayer film of the present invention exhibits excellent adhesion to the melamine resin, the multilayer film of the present invention can be suitably used as the protective film for a melamine decorative board.

The protective film for a melamine decorative board of the present invention may be laminated with a support film such as release paper on one or both surfaces thereof, or may be wound around a roll or the like with the support film laminated. In this case, the protective film for a melamine decorative board of the present invention is unwound from the roll, the support film such as the release paper is then removed, and the protective film is laminated with the melamine base material to be subjected to adhesive treatment.

Alternatively, the protective film for a melamine decorative board of the present invention or the multilayer film of the present invention may be wound around a roll or the like without an inclusion having a support film such as release paper. In this case, when the multilayer film of the present invention is used to protect the melamine base material, the multilayer film of the present invention may be unwound from the roll directly and laminated with the melamine base material to be subjected to adhesive treatment. During the lamination with the melamine base material, it is not necessary to remove the support film such as release paper, so that the protective film for a melamine decorative board of the present invention or the multilayer film of the present invention is preferably wound around a roll or the like without an inclusion having a support film such as release paper.

When the multilayer film of the present invention is used to protect the melamine base material, the melamine base material is laminated on the layer (X) side surface of the multilayer film of the present invention in the case where the multilayer film of the present invention is a film formed of two layers. Therefore, one aspect of the melamine decorative board of the present invention is the melamine decorative board including the melamine base material laminated on the layer (X) side surface of the multilayer film of the present invention. Regarding this melamine decorative board, preferably, in a laminate (melamine decorative board) including the melamine base material laminated on the layer (X) side surface of the multilayer film of the present invention, the layer (X) of the multilayer film and the melamine base material are adhered or heat-fused, and more preferably, the layer (X) of the multilayer film and the melamine base material are adhered to each other by heating and pressurization.

In addition, in a case where the multilayer film of the present invention is a multilayer film formed of three layers or four or more layers, the melamine base material is laminated on the resin layer (II) side surface of the multilayer film of the present invention. Therefore, another aspect of the melamine decorative board of the present invention is a melamine decorative board including the melamine base material laminated on the resin layer (II) side surface of the multilayer film of the present invention. In this melamine decorative board, preferably, in a laminate (melamine decorative board) including the melamine base material laminated on the resin layer (II) side surface of the multilayer film of the present invention, the resin layer (II) of the multilayer film and the melamine base material is adhered or heat-fused, and more preferably, the resin layer (II) of the multilayer film and the melamine base material are adhered to each other by heating and pressurization.

The production method for a melamine decorative board serving as a laminate, including a multilayer film that includes a film including a first layer formed from a resin composition (b) containing an acrylic resin and includes a second layer formed from a resin composition (a) containing an active energy ray-curable resin, and a melamine base material, in which the film including the first layer is laminated on a melamine base material side, includes adhering the film including the first layer to the melamine base material by heating and pressurization (hereinbelow, referred to as a third aspect). That is, in the laminate described above, the film including the first layer in the multilayer film is disposed on the melamine base material side. When the laminate including the multilayer film and the melamine base material is produced, it is preferable that the multilayer film is preferably unwound from a roll around which the multilayer film has been wound without an inclusion. According to this, it is not necessary to remove the support film such as release paper when the multilayer film and the melamine base material are laminated, which is advantageous.

The above-described third aspect may be a melamine decorative board of the present invention or a production method for a melamine decorative board including the multilayer film of the present invention.

In the third aspect, the resin composition (b) contains an acrylic resin. As the acrylic resin, the same acrylic resins as those described in Reactive Group-containing Resin (B-1) and Thermoplastic Polymer (B-3) can be used.

The resin composition (b) in the third aspect may contain the core-shell rubber described in Core-shell Rubber (B-2) and/or the additive described in Additive (B-4).

The resin composition (b) contains an acrylic resin in the third aspect. The first layer formed from the resin composition (b) in the third aspect may be the resin layer (II) of the multilayer film of the present invention.

In a case where the multilayer film used in the production method of the melamine decorative board of the present invention is a film formed of two layers, the film including the first layer formed from the resin composition (b) includes only the first layer. In addition, in this case, the first layer may be the resin layer (II) of the multilayer film of the present invention.

In a case where the multilayer film used in the production method of the melamine decorative board of the present invention is a multilayer film formed of three layers or four or more layers, the film including the first layer formed from the resin composition (b) may be a film further including a layer other than the first layer. In addition, in this case, the first layer may be the resin layer (II) of the multilayer film of the present invention, and another layer other than the first layer may be the resin layer (III) of the multilayer film of the present invention.

In the third aspect, the resin composition (a) contains an active energy ray-curable resin.

As the resin composition (a) in the third aspect, the same resin compositions (a) as those in the first aspect and second aspect can be used.

The formation of the first layer, the formation of the second layer, and the production of the multilayer film in the third aspect can be carried out by employing the methods according to the first aspect and the second aspect or the methods for the resin layer (I), the resin layer (II) and the resin layer (III) of the film of the present invention.

The heating and pressurization can be carried out for adhering the film including the first layer to the melamine base material in the production method for a melamine decorative board of the present invention at a temperature of 110°C or higher and 170°C or lower. In addition, the heating and pressurization can be carried out at a pressure of 5 MPa or more and 10 MPa or less. In addition, the heating and pressurization can be carried out under the conditions of a time of 10 minutes or more and 90 minutes or less. The heating and pressurization are preferably carried out for adhering the film including the first layer to the melamine base material in the production method for a melamine decorative board of the present invention under the conditions of a temperature of 110°C or higher and 170°C or lower, a pressure of 5 MPa or higher and 10 MPa or lower, and a time of 10 minutes or more and 90 minutes or less.

[Examples]

Hereinafter, the present invention will be described in more detail with reference to examples, but the present invention is not limited to these examples. In the examples, "parts" represents "parts by mass". In addition, the abbreviations in the examples are as follows.

MMA: Methyl methacrylate
MA: Methyl acrylate
BA: Butyl acrylate
HPMA: 2-Hydroxypropyl methacrylate
St: Styrene
AMA: allyl methacrylate
BDMA: 1,3-Butylene glycol dimethacrylate
CHP: Cumene hydroperoxide
tBH: t-Butyl hydroperoxide
LPO: Lauryl peroxide
nOM: n-Octyl mercaptan
RS610NA: Sodium mono-n-dodecyloxytetraoxyethylene phosphate (trade name: "Phosphanol RS-610NA",' manufactured by TOHO Chemical Industry Co.,Ltd.)
LA31: A benzotriazole ultraviolet absorber, manufactured by ADEKA Corporation, "ADK STAB LA-31RG" (trade name)

LA57: A hindered amine light stabilizer, manufactured by ADEKA Corporation, "ADK STAB LA-57" (trade name)
TV234: A benzotriazole ultraviolet absorber, manufactured by BASF Japan, "Tinuvin234" (trade name)
TV123: A hindered amine light stabilizer, manufactured by BASF Japan, "Tinuvin123" (trade name)
TVPS: A benzotriazole ultraviolet absorber, manufactured by BASF Japan, "TinuvinPS" (trade name)
TV292: A hindered amine light stabilizer, manufactured by BASF Japan, Ltd., "Tinuvin292" (trade name)
2020: A hindered amine light stabilizer, manufactured by BASF Japan, "Chimassorb2020" (trade name)
R976: fumed silica, manufactured by Nippon Aerosil Co., Ltd., "AEROSIL R976" (trade name)
1076: A hindered phenol antioxidant, manufactured by BASF Japan, "Irganox1076" (trade name)
S90V: A stearic acid, manufactured by Kao Corporation, "LUNAC S90V" (trade name)
VH5: A methacrylic resin (PMMA), manufactured by Mitsubishi Chemical Corporation, "ACRYPET VH5001" (trade name)
L1000: An acrylic polymer external lubricant, manufactured by Mitsubishi Chemical Corporation, "METABLEN L-1000" (trade name)
15170: A reactive group-containing resin, manufactured by Polyscope, "Xiran SZ15170" (trade name) (maleic acid anhydride copolymerization amount: 15% by mass, Tg: 131°C)
UV1700B: Polyfunctional urethane acrylate having 10 acryloyl groups in one molecule, manufactured by Mitsubishi Chemical Corporation, "Shikou UV1700B" (trade name)
UV7600B: Polyfunctional urethane acrylate having 6 acryloyl groups in one molecule, manufactured by Mitsubishi Chemical Corporation, "Shikou UV7600B" (trade name)
DPHA: Dipentaerythritol hexaacrylate, manufactured by Nippon Kayaku Co., Ltd., "Kayarad DPHA" (trade name)
M-402: A mixture of dipentaerythritol pentaacrylate and dipentaerythritol hexaacrylate, manufactured by TOAGOSEI CO., LTD., "ARONIX M-402" (trade name).
#300: Pentaerythritol triacrylate, manufactured by Osaka Organic Chemical Industry Ltd., "Viscoat#300" (trade name)
M-315: Isocyanuric acid EO-modified di- and triacrylate, manufactured by Toagosei Co., Ltd., "ARONIX M-315" (trade name)
FM400: Neopentyl glycol hydroxypivalate diacrylate, manufactured by Nippon Kayaku Co., Ltd., "KAYARAD FM400" (trade name)
BYK-333: A silicon-based surface modifier, manufactured by BBYK Japan KK., "BYK-333" (trade name)
BYK-UV3500: A silicon-based surface modifier, manufactured by BBYK Japan KK., "BYK-UV3500" (trade name)
HX-RPH: A ultraviolet curable hard coat agent, manufactured by Kyoeisha Chemical Co., Ltd., "UV curable hard coat agent HX-RPH" (trade name)
8UB-017: urethane-modified acrylic polymer, manufactured by Taisei Fine Chemical Co., Ltd., "Acryt 8UA-017" (trade name)
TPA-B80E: block isocyanate of 1,6-hexamethylene diisocyanate, manufactured by Asahi Kasei Co., Ltd., "DURANATE TPA-B80E" (trade name)

Measurement of various physical properties in Examples was carried out according to the following methods.

(1) Hydroxyl Value

The acid value and hydroxyl value of the reactive group-containing resin (B-1) were determined by the following methods. First, a sample was dissolved in acetone and titration was carried out with a 0.1 mol/L ethanolic potassium hydroxide solution using phenolphthalein as an indicator. In addition, a blank test was carried out by the same operation except that the sample was not used, and an acid value was obtained according to the following equation.

$$\text{Acid value} = (A - B) \times f \times 56.1 \times 0.1/S$$

f: titer of 0.1 mol/L ethanolic potassium hydroxide
S: Sample amount (g)
A: Amount of ethanolic potassium hydroxide used for titration (ml)
B: Amount of ethanolic potassium hydroxide used in blank test (ml)

Next, the sample was dissolved in acetic acid anhydride and pyridine, subjected to acetylation, and titration was carried out with a 0.5 mol/L ethanolic potassium hydroxide solution with phenolphthalein as an indicator. In addition, a blank test was carried out by the same operation except that the sample was not used, and a hydroxyl value was obtained according to the following equation.

$$\text{Hydroxyl value} = (B - A) \times f \times 56.1 \times 0.5/S + \text{acid value}$$

f: titer of 0.5 mol/L ethanolic potassium hydroxide
S: Sample amount (g)
A: Amount of ethanolic potassium hydroxide used for titration (ml)
B: Amount of ethanolic potassium hydroxide used in blank test (ml)

The calculated hydroxyl value is a value assuming that the introduction rate of hydroxyl monomers is 100%, and the acid value is 0.

(2) Mass-average Molecular Weight (Mw)

The mass-average molecular weight (Mw) of a polymer was determined by the following method. The measurement on a sample obtained by dissolving the polymer in tetrahydrofuran was carried out at a temperature of 40°C using a gel permeation chromatography (model name: "HLC-8200", manufactured by Tosoh Corporation), a column (trade name: "TSK-GEL SUPER MULTIPORE HZ-H", manufactured by Tosoh Corporation, an inner diameter of 4.6mm × a length of 15cm × two columns), and an eluent (tetrahydrofuran). The mass-average molecular weight (Mw) was determined from a calibration curve from polystyrene standards.

(3) Glass-transition Temperature (Tg)

The glass-transition temperature of the polymer was calculated from the FOX equation by using values described in [Polymer HandBook (J. Brandrup, Interscience, 1989)] or values in a catalog of a monomer maker.

(4) Average Particle Diameter

Regarding an average particle diameter of the core-shell rubber, a final particle diameter of a polymer latex of the polymer, which was obtained by the emulsion polymerization, was measured with a dynamic light scattering method using a light scattering photometer (product name: "DLS-700", manufactured by Otsuka Electronics Co., Ltd.).

(5) Gel Fraction

To 0.5 g of the obtained resin compositions (B1) to (B6) and (C1) to (C8) was added 50 ml of acetone, and the mixture was stirred at 65°C for 4 hours. Thereafter, centrifugation was carried out at 14,000 rpm for 30 minutes at 4°C, 50 ml of acetone was added again after the supernatant was removed, and centrifugation was carried out again under the same conditions. After removing the supernatant, the precipitated gel portion was vacuum dried for 8 hours to measure the mass, and the gel fraction was calculated according to the following equation.

$$\text{Gel fraction (\%)} = (\text{mass of gel portion (g)}/0.5) \times 100$$

(6) Thickness of Resin Layer (I), (II), and (III)

The multilayer film was cut into a proper size, and the thicknesses of the resin layers (I), (II), and (III) were measured using a reflection spectroscopic film thickness meter FE3000 (trade name, manufactured by Otsuka Electronics Co., Ltd.).

(7) Sticking of Multilayer Film

When the obtained multilayer film was laminated on melamine decorative paper, a film observed without sticking at all on the resin layer (II) side was defined as A, a film observed with almost no sticking was defined as B, and a film observed with clearly sticking was defined C.

(8) Boiling Test

A boiling test was carried out using the obtained melamine decorative board at a temperature of 100°C and a dipping time for 2 hours in accordance with European Committee for Standardization (CEN) standards, EN438-2.

(9) Hot Water Test

A hot water test was carried out using the obtained melamine decorative board at a temperature of 65°C and a dipping time for 48 hours in accordance with European Committee for Standardization (CEN) standards, EN438-2.

(10) Adhesive Evaluation

After the boiling test, 100 squares of a substrate grid was made at intervals of 1 mm with a cutter knife, and peelability was confirmed with a cellophane tape (manufactured by NICHIBAN Co., Ltd.) according to the following Evaluation Standard.

(Evaluation Criteria)

A: squares have not been peeled off at all
B: 1 to 9 squares were peeled off.
C: 10 or more squares were peeled off.

(11) Scratch Hardness

A scratch hardness test was carried out using the obtained melamine decorative board in accordance with European Committee for Standardization (CEN) standards, EN438-2 to evaluate a load at which scratches can be visually recognized.

(12) Total Transmittance (TT) and Haze Value (Haze)

The total transmittance of the obtained multilayer film was evaluated in accordance with JIS K7361-1, and the haze value was evaluated in accordance with JIS K7136.

(13) Melamine Base Material Endothermic Peak Temperature

By using DSC6200 (product name, manufactured by SII Nanotechnology Inc.), an endothermic peak temperature of the melamine base material when heated from 25°C to 200°C at 10°C/min under a nitrogen stream was measured, a first endothermic peak temperature was defined as the endothermic peak temperature of the melamine base material.

(14) Tensile Elongation at Break

The obtained multilayer film was cut into 150 mm × 15 mm where the film formation direction was a long side, and an autograph tensile tester (trade name, manufactured by Shimadzu Corporation) was used to carry out a tensile test at a distance between chucks of 100 mm, a tensile rate of 100 mm/min, in air atmosphere, and at a temperature of 23°C, and the tensile elongation at break of the multilayer film was measured.

(15) Crack During Molding

The obtained melamine decorative board was visually observed. As a result, no crack present at all was evaluated as A, almost no crack was evaluated as B, and the crack that was clearly present was evaluated as C.

(16) Arithmetic average roughness (Ra)

The arithmetic average roughness of the embossed sheet used to produce the melamine decorative board for measuring a gloss value at 60° and the arithmetic average roughness of the layer (I) side of the multilayer film were measured with a surface roughness measuring machine (manufactured by Tokyo Seisaku-sho, Ltd., trade name) in accordance with JIS B0601-2001gloss value at 60° under the conditions of a measurement length of 4.0 mm, an evaluation length of 4.0 mm, a cut-off wavelength of 0.8 mm, and a measurement speed of 0.3 mm/sto measure an arithmetic average roughness (Ra) and an average length of contour curve elements (Rsm) of each of the embossed sheet used to produce the melamine decorative board for measuring a gloss value at 60° and the layer (I) side of the multilayer film.
When only the standard length is extracted from the roughness curve in a direction of an average line, an X axis is set along a direction of an average line of this extracted part, an Y axis is set along a direction of the vertical magnification, and a roughness curve is represented by y = f(x), the arithmetic average roughness (Ra) refers to a value determined by the following expression represented by micrometer (μm).

$$\mathrm{Ra} = \frac{1}{l}\int_0^l [f(x)]\,dx$$

(17) Storage Elastic Modulus (E')

A storage elastic modulus (E') employed a numerical value of a temperature of 100°C when a test piece with a width of 6 mm and a length of 20 mm, which was cut out from the film, was measured in accordance with JIS K7244by using EXSTAR DMS 6100 manufactured by Seiko Instruments Inc. under the conditions of a temperature increasing rate of 2°C/min with a tensile mode and a measurement frequency of 0.1 Hz.

(18) Gloss Value at 60° (%)

The melamine decorative board for measuring agloss value at 60° was produced according to a procedure described later, and a gloss value at 60° (%) of the obtained melamine decorative board was calculated in accordance with JIS Z 8741.

Resin compositions (A1) to (A6) were prepared as described below by using raw materials shown in Table 1.

[Table 1]

| | | Resin composition (a) | | | | | |
|---|---|---|---|---|---|---|---|
| | | A1 | A2 | A3 | A4 | A5 | A6 |
| A-1 | A-1Ad (part) | 100 | 0 | 0 | 0 | 0 | 0 |
| | A-1Ae (part) | 0 | 100 | 0 | 0 | 0 | 0 |
| | A-1Aa (part) | 0 | 0 | 100 | 0 | 0 | 0 |
| | A-1Ab (part) | 0 | 0 | 0 | 100 | 0 | 0 |
| | A-1Ac (part) | 0 | 0 | 0 | 0 | 100 | 0 |
| | HX-RPH (part) | 0 | 0 | 0 | 0 | 0 | 100 |
| A-3 | TV123 (part) | 0 | 0 | 0.3 | 0.3 | 0 | 0 |
| | Surface-modified silica (part) *Diluent of 60% toluene | 0 | 0 | 18.3 | 18.3 | 0 | 0 |
| | BYK-UV3500 (part) | 0 | 0 | 1 | 1 | 0 | 0 |
| | TVPS (part) | 0 | 0 | 0 | 0 | 2 | 0 |
| | TV292 (part) | 0 | 0 | 0 | 0 | 2 | 0 |
| | BYK-333 (part) | 0 | 0 | 0 | 0 | 1 | 0 |

<Production Example 1: Production of Reactive Group-containing Resin (B-1A)>

In Production Example 1, a reaction container equipped with a stirrer, a reflux condenser, a nitrogen gas inlet port and the like was charged with a mixture of the following components.

| | |
|---|---|
| MMA | 80 parts |
| BA | 5 parts |
| HPMA | 15 parts |
| nOM | 0.25 parts |
| LPO | 0.4 parts |

Copolymer of methyl methacrylate/methacrylate/ethyl methacrylate sulfonate

| | |
|---|---|
| | 0.02 parts |
| Sodium sulfate | 0.3 parts |
| Deionized water | 145 parts |

The inside of the container was sufficiently substituted with nitrogen gas, followed by heating the mixture to 75°C while stirring the mixture to proceed with a polymerization reaction in the nitrogen gas stream. Two hours later, the temperature was increased to 95°C and further maintained for 60 minutes to complete the polymerization. The obtained polymer beads were dehydrated and dried to obtain a reactive group-containing resin (B-1A). Mw of the obtained reactive group-containing resin (B-1A) was 96,800, Tg was 78°C, and a hydroxyl value was 58 mgKOH/g.

<Production Example 2: Production of Core-shell Rubber (B-2A)>

In a nitrogen atmosphere, 153 parts of deionized water was put into a reaction container equipped with a reflux condenser, and a temperature was increased to 80°C. The following component (i) was added, and the following component (ii) was added while performing stirring. Thereafter, the mixture was held for 1 hour, and polymerization was carried out to obtain a polymer latex.
Subsequently, 0.1 parts of sodium formaldehyde sulfoxylate was added to the polymer latex. Thereafter, the mixture was held for 15 minutes, and the following component (iii) was added while performing stirring at 80°C in a nitrogen atmosphere. Thereafter, the mixture was held for 1 hour, and polymerization was carried out to obtain a latex of core-shell rubber (B-2A). The average particle diameter of the core-shell rubber (B-2A) was 0.12 μm.
The latex of the core-shell rubber (B-2A) was filtered through a filter having an opening of 50 μm. Next, coagulation was carried out using calcium acetate, and filtration, water rinsing, and drying were then carried out to obtain a core-shell rubber (B-2A).
(i)

| | |
|---|---|
| Sodium formaldehyde sulfoxylate | 0.4 parts |
| Ferrous sulfate | 0.00004 parts |
| Disodium ethylenediaminetetraacetate | 0.00012 parts |

(ii)

| | |
|---|---|
| BA | 50.9 parts |
| St | 11.6 parts |
| AMA | 0.56 parts |
| tBH | 0.19 parts |
| RS610NA | 1.0 part |

(iii)

| | |
|---|---|
| MMA | 35.6 parts |
| MA | 1.9 parts |
| tBH | 0.056 parts |
| nOM | 0.16 parts |
| RS610NA | 0.25 parts |

<Production Example 3: Production of Thermoplastic Polymer (B-3A)>

200 parts of deionized water substituted with nitrogen was charged into a reaction container, and 1 part of potassium oleate and 0.3 parts of potassium persulfate were charged as an emulsifier. Subsequently, 40 parts of MMA, 10 parts of BA, and 0.005 parts of nOM were charged and stirred at 65°C for 3 hours in a nitrogen atmosphere to complete the polymerization.

Subsequently, a monomer mixture formed of 48 parts of MMA and 2 parts of BA was added dropwise thereto over 2 hours, and after the dropwise addition was completed, the mixture was held for 2 hours to complete the polymerization.

The obtained latex was added to a 0.25% by mass aqueous solution of sulfuric acid to carry out coagulation, and filtration, water rinsing, and drying was then carried out to obtain a thermoplastic polymer (B-3A).

Mw of the obtained thermoplastic polymer (B-3A) was 1,000,000.

<Production Example 4: Production of Resin Composition (B1)>

In Production Example 4, 60 parts of (B-1A) as the reactive group-containing resin (B-1) and 40 parts of (B-2A) as the core-shell rubber (B-2) were used, and 2 parts of (B-3A) as the thermoplastic polymer (B-3), and 2.1 parts of LA31, 0.45 parts of 2020, and 0.1 parts of 1076 as the additive (B-4) were added with respect to 100 parts of this mixture, and mixed by using a Henschel mixer.

Next, by using a 35 mmφ screw-type twin-screw extruder (LID = 26), the mixture was melt-kneaded under the conditions of a cylinder temperature of 200°C to 240°C and a die temperature of 240°C to be pellets, thereby obtaining a resin composition (B 1) for the resin layer (II). The gel fraction of the resin composition (B 1) was 32%.

<Production Examples 5 to 7: Production of Resin Compositions (B2) to (B4)>

Resin compositions (B2) to (B4) were obtained according to the same procedure as that in Production Example 4 except that a core-shell rubber (B-2C) was used instead of the core-shell rubber (B-2A), and the raw material shown in Table 2 was used. The core-shell rubber (B-2C) is the same one as a core-shell rubber (C-1B) described below.

<Production Example 8: Production of Resin Composition (B5)>

A resin composition (B5) was obtained according to the same procedure as that in Production Example 4 except that the raw material shown in Table 2 wasused.

<Production Example 9: Production of Resin Composition (B6)>

A resin composition (B6) was obtained by the same procedure as that in Production Example 4 except that a core-shell rubber (B-2B) was used instead of the core-shell rubber (B-2A), and the raw material shown in Table 2 was used. The core-shell rubber (B-2B) is the same one as a core-shell rubber (C-1A) described below.

[Table 2]

| | | Production Example | | | | | |
|---|---|---|---|---|---|---|---|
| | | 4 | 5 | 6 | 7 | 8 | 9 |
| Resin composition | | B1 | B2 | B3 | B4 | B5 | B6 |
| B-1 | B-1A (part) | 60 | 84 | 76 | 68 | 0 | 0 |
| | SZ15170 (part) | 0 | 0 | 0 | 0 | 100 | 30 |
| B-2 | B-2A (part) | 40 | 0 | 0 | 0 | 0 | 0 |
| | B-2B (part) | 0 | 0 | 0 | 0 | 0 | 70 |
| | B-2C (part) | 0 | 16 | 24 | 32 | 0 | 0 |
| B-3 | B-3A (part) | 2 | 2 | 2 | 2 | 0 | 0 |
| B-4 | LA31 (part) | 2.1 | 2.1 | 2.1 | 2.1 | 2.1 | 2.1 |
| | LA57 (part) | 0 | 0 | 0 | 0 | 0.3 | 0.3 |
| | 2020 (part) | 0.45 | 0.45 | 0.45 | 0.45 | 0 | 0 |
| | 1076 (part) | 0.1 | 0.1 | 0.1 | 0.1 | 0.1 | 0.1 |
| Gel fraction (%) | | 32 | 13 | 20 | 27 | 0 | 42 |

<Production Example 10: Production of Core-shell Rubber (C-1A)>

8.5 parts of deionized water was charged with a container equipped with a stirrer, and the following component (ii) was then added thereto while performing stirring, and the stirring was carried out for 20 minutes to prepare an emulsion liquid.

Subsequently, 191.5 parts of deionized water and the following component (i) was put into a polymerization container equipped with a condenser, and the temperature was increased to 70°C. Subsequently, while stirring under nitrogen, the prepared emulsion liquid was added dropwise into the polymerization container over 8 minutes, and the reaction was then continued for 15 minutes.

Subsequently, the following component (iii) was added dropwise into the polymerization container over 90 minutes, and the reaction was then continued for 60 minutes to obtain a latex of the elastic copolymer. Tg of the elastic copolymer alone was -48°C.

Subsequently, the following component (iv) was added dropwise into the polymerization container over 45 minutes, and the reaction was then continued for 60 minutes to form an intermediate polymer on the elastic copolymer. Tg of the intermediate polymer alone was 20°C.

Subsequently, the following component (v) was added dropwise into the polymerization container over 140 minutes, and the reaction was then continued for 60 minutes to form a hard polymer on the intermediate polymer. By the above-described step, a latex containing 100 parts of the core-shell rubber (C-1A) was obtained. Tg of the hard polymer alone was 84°C. In addition, the average particle diameter of the core-shell rubber (C-1A) measured after polymerization was 0.12 μm.

This latex of the core-shell rubber (C-1A) was filtered through a filter having an opening of 50 μm. Next, coagulation was carried out using calcium acetate, and filtration, water rinsing, and drying were then carried out to obtain a core-shell rubber (C-1A).

(i)

| | |
|---|---|
| Sodium formaldehyde sulfoxylate | 0.2 parts |
| Ferrous sulfate | 0.0001 parts |
| Disodium ethylenediaminetetraacetate | 0.0003 parts |

(ii)

| | |
|---|---|
| MMA | 0.3 parts |
| BA | 4.5 parts |
| AMA | 0.05 parts |
| BDMA | 0.2 parts |
| CHP | 0.025 parts |
| RS610NA | 1.1 parts |

(iii)

| | |
|---|---|
| MMA | 1.5 parts |
| BA | 22.5 parts |
| AMA | 0.25 parts |
| BDMA | 1.0 part |
| CHP | 0.016 parts |

(iv)

| | |
|---|---|
| MMA | 6.0 parts |
| BA | 4.0 parts |
| AMA | 0.075 parts |
| CHP | 0.013 parts |

(v)

| | |
|---|---|
| MMA | 55.2 parts |
| BA | 4.8 parts |
| nOM | 0.22 parts |
| tBH | 0.075 parts |

<Production Example 11: Production of Core-shell Rubber (C-1B)>

In a nitrogen atmosphere, 206 parts of deionized water was put into a reaction container equipped with a reflux condenser, and the temperature was increased to 80°C. The following component (i) was added thereto, and 1/10 of the following raw material (ii) (part of the raw material for the elastic copolymer (a-1)) shown below was charged while stirring, and the mixture was held for 15 minutes. Subsequently, the remaining raw material (ii) was continuously added such that the increasing rate of the monomer mixture with respect to water was 8% by mass/hour. Thereafter, polymerization was carried out for 1 hour to obtain a polymer latex. Subsequently, 0.2 parts of sodium formaldehyde sulfoxylate was added to the polymer latex. Thereafter, while holding for 15 minutes and carrying out stirring at 80°C in a nitrogen atmosphere, a raw material (iii) (part of the raw material for the elastic copolymer (a-1)) shown below was continuously added so that the increasing rate of the monomer mixture with respect to water was 4% by mass/hour. Thereafter, polymerization was carried out for 2 hours to obtain a latex of the elastic copolymer (a-1).

0.2 parts by mass of sodium formaldehyde sulfoxylate was added to the latex of the elastic copolymer (a-1). Thereafter, while holding for 15 minutes and carrying out stirring at 80°C in a nitrogen atmosphere, a raw material (iv) (the raw material for the hard polymer (a-2)) shown below was continuously added so that the increasing rate of the monomer mixture with respect to water was 10% by mass/hour. Thereafter, polymerization was carried out for 1 hour to obtain a latex of core-shell rubber (C-1B). The particle diameter of the core-shell rubber (C-1B) was 0.28 μm.

This latex of the core-shell rubber (C-1B) was filtered through a filter having an opening of 50 μm. Next, a coagulation, aggregation, and solidification reaction were carried out using calcium acetate, and filtration, water rinsing, and drying were carried out to obtain a core-shell rubber (C-1B).

(i)

| | |
|---|---|
| Sodium formaldehyde sulfoxylate | 0.4 parts |
| Ferrous sulfate | 0.00004 parts |
| Disodium ethylenediaminetetraacetate | 0.00012 parts |

(ii)

| | |
|---|---|
| MMA | 11.25 parts |
| BA | 12.5 parts |
| St | 1.25 parts |
| AMA | 0.094 parts |
| BDMA | 0.75 parts |
| tBH | 0.044 parts |
| RS610NA | 0.75 parts |

(iii)

| | |
|---|---|
| BA | 30.9 parts |
| St | 6.6 parts |
| AMA | 0.66 parts |
| BDMA | 0.09 part |
| CHP | 0.11 parts |
| RS610NA | 0.6 parts |

(iv)

| | |
|---|---|
| MMA | 35.6 parts |
| MA | 1.9 parts |
| nOM | 0.11 parts |
| tBH | 0.06 parts |

<Production Example 12: Production of Core-shell Rubber (C-1C)>

In a nitrogen atmosphere, 200 parts of deionized water was put into a reaction container equipped with a reflux condenser, and the following raw material (ii) was then premixed, and the temperature was increased to 75°C. After the temperature was increased, the raw material (i) was put into the polymerization container at once, and the polymerization was initiated. After a temperature increase peak was confirmed, the reaction was continued for 15 minutes to complete the polymerization of a first elastic copolymer. Subsequently, the raw material (iii) was added dropwise into the polymerization container over 120 minutes. The reaction was continued for 60 minutes to complete the polymerization of a second elastic copolymer. Tg of the first elastic copolymer and the second elastic copolymer alone was both -48.5°C.

Next, the raw material (iv) was added dropwise into the polymerization container over 120 minutes. Thereafter, the reaction was maintained for 30 minutes to obtain a latex-like core-shell rubber (C-1C). Tg of the hard copolymer alone was 79.3°C. The solid content of the latex-like core-shell rubber (C-1C) measured after polymerization was 33%, and the average particle diameter was 0.12 μm.

100 parts of the obtained latex-like core-shell rubber (C-1C) was filtered through a vibration type filtration device equipped with an SUS mesh having an opening of 62 μm. Next, the latex was coagulated by addition dropwise to 100 parts of hot water at 80°C containing 2.5 parts of calcium acetate. The temperature was further increased to 95°C and held for 5 minutes to be solidified. The obtained aggregate was separated, washed, and dried at 75°C for 24 hours to obtain a powdery core-shell rubber (C-1C). The gel content of the core-shell rubber (C-1C) was 70%, and the Mw was 36,000.

(i)

| | |
|---|---|
| Sodium formaldehyde sulfoxylate | 0.2 parts |
| Ferrous sulfate | 0.0001 parts |
| Disodium ethylenediaminetetraacetate | 0.0003 parts |

(ii)

| | |
|---|---|
| MMA | 0.3 parts |
| BA | 4.7 parts |
| AMA | 0.08 parts |
| CHP | 0.025 parts |
| OTP | 1.0 part |

(iii)

| | |
|---|---|
| MMA | 3.0 parts |
| BA | 47.0 parts |
| AMA | 0.8 parts |
| CHP | 0.05 parts |

(iv)

| | |
|---|---|
| MMA | 40.5 parts |
| BA | 4.5 parts |
| nOM | 0.30 parts |
| tBH | 0.06 parts |

<Production Example 13: Production of Resin Composition (C1)>

In Production Example 13, the resin composition (C1) for the resin layer (III) was obtained in the same manner as the procedure in Production Example 4, except that the core-shell rubber (C-1A) is used as the core-shell rubber (C-1), and 2 parts of (B-3A) as the thermoplastic polymer (C-2), 2.36 parts of LA31, 0.51 parts of 2020, 1.0 parts of L1000, and 0.1 parts of 1076 as the additive (C-3) were used with respect to 100 parts of (C-1A). The gel fraction of the resin composition (C1) was 60%.

<Production Examples 14 to 20: Production of Resin Compositions (C2) to (C8)>

In Production Examples 14 to 20, resin compositions (C2) to (C8) were obtained by the same procedure as that in Production Example 13, except that the raw material shown in Table 3 was used.

[Table 3]

| | | Production Example | | | | | | | |
|---|---|---|---|---|---|---|---|---|---|
| | | 13 | 14 | 15 | 16 | 17 | 18 | 19 | 20 |
| Resin composition | | C1 | C2 | C3 | C4 | C5 | C6 | C7 | C8 |
| C-1 | C-1A (part) | 100 | 0 | 50 | 0 | 0 | 0 | 0 | 0 |
| | C-1B (part) | 0 | 24 | 0 | 0 | 24 | 23 | 22 | 16 |
| | C-1C (part) | 0 | 0 | 50 | 100 | 0 | 0 | 0 | 0 |
| C-2 | B-3A (part) | 2 | 2 | 2 | 2 | 0 | 5 | 10 | 1 |
| | VH5 (part) | 0 | 76 | 0 | 0 | 76 | 72 | 68 | 84 |
| C-3 | LA31 (part) | 2.36 | 2.36 | 2.36 | 2.36 | 2.36 | 2.36 | 2.36 | 2.1 |
| | LA57 (part) | 0 | 0 | 0 | 0 | 0 | 0 | 0 | 0.15 |
| | 2020 (part) | 0.51 | 0.51 | 0.51 | 0.51 | 0.51 | 0.51 | 0.51 | 0 |
| | L1000 (part) | 1 | 0 | 0 | 0 | 0 | 0 | 0 | 0 |
| | R976 (part) | 0 | 0.3 | 0.3 | 0.3 | 0.3 | 0.3 | 0.3 | 0 |
| | 1076 (part) | 0.1 | 0.1 | 0.1 | 0.1 | 0.1 | 0.1 | 0.1 | 0.1 |
| Gel traction (%) | | 60 | 21 | 65 | 70 | 21 | 21 | 21 | 14 |

<Production Example 21: Production of Chain Transfer Agent (Y)>

1.00 g of cobalt (II) acetate tetrahydrate, 1.93 g of diphenylglyoxime, and 80 ml of diethyl ether, which was previously deoxygenated by nitrogen bubbling, were added to a flask provided with a stirring device under a nitrogen atmosphere and stirred at room temperature for 30 minutes. Next, 10 ml of a boron trifluoride diethyl ether complex was added and further stirred for six hours. The obtained reactant was filtered, and the solid content was washed with diethyl ether and vacuum dried for 15 hours to obtain 2.12 g of the chain transfer agent (Y) of a red brown solid.

<Production Example 22: Production of Acrylic Polymer (P1)>

145 parts of deionized water, 0.1 parts of sodium sulfate, and 0.25 parts of a copolymer of methyl methacrylate/methacrylate/ethyl methacrylate sulfonate were added to a flask equipped with a stirrer, a cooling pipe, and a thermometer and stirred to obtain a uniform aqueous solution. Subsequently, a monomer mixture of 100 parts of methyl methacrylate, 0.005 parts of the chain transfer agent (Y), and 0.4 parts of 2,2'-azobis(2-methylbutyronitrile) was added to a flask to obtain an aqueous suspension. Next, the reaction was caused for about 1 hour by substituting the inside of the flask with nitrogen and raising the temperature to 80°C, and the temperature was increased to 93°C and held for 1 hour in order to further increase the polymerization rate. Next, the reaction solution was cooled to 40°C to obtain an aqueous polymer suspension. The polymer contained in this aqueous polymer suspension was filtered using a nylon filter cloth having an opening of 45 μm, washed with deionized water, and then dried at 40°C for 16 hours to obtain an acrylic polymer (P1A). The glass-transition temperature (Tg) of the acrylic polymer (P1) was 82°C, and the mass-average molecular weight (Mw) was 7,800.

<Production Example 23: Production of Acrylic Polymer (R1)>

To a flask equipped with a thermometer, a stirrer, and a reflux cooling tube were added propylene glycol monomethyl ether (178 parts by mass), glycidyl methacrylate (66 parts by mass), methyl methacrylate (33 parts by mass), ethyl acrylate (1.0 parts by mass), and 2,2'-azobis(2,4-dimethylvaleronitrile) (1.0 parts by mass) to carry out a reaction at 65°C for 3 hours.

Subsequently, 2,2'-azobis(2,4-dimethylvaleronitrile) (0.5 parts by mass) was further added thereto to carry out a reaction for 3 hours, and propylene glycol monomethyl ether (48 parts by mass) and p-methoxyphenol (0.5 parts by mass) was added thereto, and the mixture was heated to 100°C.

Next, acrylic acid (34 parts by mass) and triphenylphosphine (1.6 parts by mass) were added and reacted at 110°C for 6 hours to obtain a double bond amount (the concentration of acryloyl groups (the introduction amount of acryloyl groups) to obtain an acrylic polymer (R1) having a 3.4 mmol/g of radically polymerizable double bond in the side chain.

<Production Example 24: Production of UV Curable Resin (A-1Aa)>

70 parts by mass of DPHA as the polymerizable monomer, 30 parts by mass of #300, 70 parts by mass of the acrylic polymer (P1) as the acrylic polymer (P), and 30 parts by mass of the acrylic polymer (R1) as the acrylic polymer (R), 3 parts by mass of benzophenone as the photopolymerization initiator, and 3 parts by mass of Omnirad 651 (manufactured by BASF Japan) were mixed, and this was diluted with a solvent of toluene/propylene glycol monomethyl ether = 82/18 so that a solid concentration was 45% by mass to obtain a UV curable resin (A-1Aa).

<Production Example 25: Production of UV Curable Resin (A-1Ab)>

AUV curable resin (A-1Ab) was obtained by the same procedure as that in Production Example 24 except that 30 parts by mass of UV1700B and 70 parts by mass of #300 were used as the polymerizable monomers.

<Production Example 26: Production of UV Curable Resin (A-1Ac)>

As a polymerizable monomer, 30 parts by mass of M-402, 40 parts by mass of FM400, 30 parts by mass of M-315, and as the photopolymerization initiator, 3 parts by mass of benzophenone and 3 parts by mass of Omnirad 651 (manufactured by BASF Japan) were mixed, and this was diluted with a solvent of xylene/butyl acetate/propylene glycol monomethyl ether = 40/40/30 so that a solid concentration was 50% by mass to obtain a UV curable resin (A-1Ac).

<Production Example 27: Production of UV Curable Resin (A-1Ad)>

As a polymerizable monomer, 100 parts by mass of UV1700B and as a photopolymerization initiator, 4 parts by mass of Omnirad184 (manufactured by BASF Japan) were mixed and diluted with a solvent of ethyl acetate so that the solid concentration was 50% by mass to obtain a UV curable resin (A-1Ad).

<Production Example 28: Production of UV Curable Resin (A-1A)>

AUV curable resin (A-1Ae) was obtained by the same procedure as that in Production Example 27 except that UV7600B was used as a polymerizable monomer.

<Example 1: Production of Multilayer Film and Melamine Decorative Board >

The resin composition (B1) for the resin layer (II) obtained in Production Example 4 and the resin composition (C2) for the resin layer (III) obtained in Production Example 14 were dried at 80°C for a day and night.

(B1) was plasticized with a 30 mmcp extruder in which the cylinder temperature was set to 230°C. In addition, the resin composition (C2) was plasticized with a 40 mmφ extruder provided with 400 screen mesh in which the cylinder temperature was set to 230°C.

Next, with a feed block die for two kinds of two layers set at 240°C, a multilayer film having a thickness of 50 μm was formed. The thicknesses of the resin layers (II) and (III) were 5 μm and 45 μm, respectively.

The resin composition (A1) consisting of the UV curable resin (A-1Ad) was used as the active energy ray-curable resin (A-1) on the resin layer (III) surface side of the multilayer film and applied with a No. 32 bar coater. Next, drying was carried out at 60°C for 3 minutes, and ultraviolet curing was carried out such that the integrated light amount was 450 mJ/cm$^2$. The thickness of the resin layer (I) was 28 μm.

Furthermore, melamine resin-impregnated paper was laminated on the resin layer (II) surface side of the multilayer film, both surfaces were sandwiched between mirror-surface stainless steel sheets, and pressed under conditions of a temperature of 150°C, a pressure of 3 MPa, and a time of 60 minutes to produce a melamine decorative board. The results of the adhesion and scratch hardness of the obtained melamine decorative board after the water resistance test are shown in Table below. The endothermic peak temperature of the melamine base material used was 100°C.

<Examples 2 to 3>

The multilayer film and the melamine decorative board were produced in the same manner as in the operation of Example 1, except that the materials as shown in Tables 1 to 3 were used, and the thicknesses of the resin layers (I) to (III) were set as shown in Table below. The evaluation results of the obtained melamine decorative board are shown in Table below.

<Examples 4 to 10 and Comparative Example 2>

The resin composition (A3) containing 100 parts of the UV curable resin (A-1Aa) as the active energy ray-curable resin and 0.3 parts of TV123 as the additive (A-3), 18.3 parts of a solution in which 60% of silica (weight average particle diameter 10 to 100 nm) whose surface has been modified with a radically polymerizable unsaturated group was dispersed in toluene, 1 part by mass of BYK-UV3500 was used to produce the multilayer film and the melamine decorative board in the same manner as the operation in Example 1, except that the thicknesses of resin layers (I) to (III) were as shown in the table below. The evaluation results of the obtained melamine decorative board are shown in Table below.

<Example 11>

The resin composition (A4) containing 100 parts of the UV curable resin (A-1Ab) as the active energy ray-curable resin and 0.3 parts of TV123 as the additive (A-3), 18.3 parts of a solution in which 60% of silica (weight average particle diameter 10 to 100 nm) whose surface has been modified with a radically polymerizable unsaturated group was dispersed in toluene, 1 part of BYK-UV3500 was used to produce the multilayer film and the melamine decorative board in the same manner as the operation in Example 1, except that the thicknesses of resin layers (I) to (III) were as shown in the table below. The evaluation results of the obtained melamine decorative board are shown in Table below.

<Examples 12 to 25 and Comparative Examples 3 to 4>

The resin composition (A5) containing 100 parts of the UV curable resin (A-1Ac) as the active energy ray-curable resin, 2 parts of TVPS and 2 parts of TV292 as the additive (A-3), and 1 part of BYK-333 was used to produce the multilayer film and the melamine decorative board in the same manner as the operation in Example 1, except that the thicknesses of resin layers (I) to (III) were as shown in the table below. The evaluation results of the obtained melamine decorative board are shown in Table below.

<Examples 26 to 29>

A multilayer film and a melamine decorative board were produced in the same manner as in the operation of Example 1, except that the resin layer (III) was not laminated and the thicknesses of the resin layers (I) and (II) were set as shown in Table below. The evaluation results of the obtained melamine decorative board are shown in Table below.

<Examples 30 to 34 and Comparative Example 5>

A multilayer film and a melamine decorative board were produced in the same manner as in the operation of Example 1 except that a resin composition (A6) in which HX-RPH (solid content: 50%) is used without dilution as an active energy ray-curable resin, and the thicknesses of the resin layers (I) to (III) are shown in Table below. The evaluation results of the obtained melamine decorative board are shown in Table below.

<Comparative Example 1>

As the resin layer (II), 8ua-017 (Tg: 10°C) (ethyl acetate 70% diluent) was applied on melamine decorative board with No. 3 bar coater. Next, drying was carried out at 60°C for 3 minutes to obtain a resin layer (II). The thickness of the resin layer (II) was 5 μm. A multilayer film and a melamine decorative board were produced in the same manner as in Example 1, except that the materials were used as shown in the Table below. The evaluation results of the obtained melamine decorative board are shown in Table below.

<Comparative Example 6>

A multilayer film of the resin layer (II) and the resin layer (III) is produced in the same manner as in Example 1, and a thermosetting resin (A-2A) was laminated as the resin layer (I) on the surface side of the resin layer (III) of the multilayer film. As the thermosetting resin (A-2A), TPA-80E (30 parts) as the polyisocyanate (α-1) and a reactive group-containing resin (B-1A) (70 parts) as the acrylic polyol (α-2) were used. This mixture was diluted with a mixed solvent of ethyl acetate/acetone = 3/1 to obtain an application solution. Next, the obtained application solution was applied using a No. 14 bar coater and pre-drying was carried out at 60°C for 3 minutes. Thereafter, air-drying was carried out overnight to obtain an uncured resin layer (I). The gel content of the resin layer (I) before curing was 0%.

Furthermore, melamine resin-impregnated paper was laminated on the resin layer (II) surface side of the multilayer film, both surfaces were sandwiched between mirror-surface stainless steel sheets, and pressed under the conditions of a temperature of 150°C, a pressure of 3 MPa, and a time of 60 minutes to obtain a melamine decorative board. The thickness of the resin layer (I) after curing was 12 μm. The gel content of the resin layer (I) after curing was 95%. The results of the adhesion and scratch hardness of the obtained melamine decorative board after the water resistance test are shown in Table below. The endothermic peak temperature of the melamine base material used was 100°C.

<Comparative Examples 7 to 9>

A multilayer film and a melamine decorative board were produced in the same manner as in Examples 1, 19, and 26, except that the resin layer (I) was not laminated. The evaluation results of the obtained melamine decorative board are shown in Table below.

[Table 4]

| Example | | 1 | 2 | 3 | 4 | 5 | 6 | 7 | 8 | 9 | 10 | 11 |
|---|---|---|---|---|---|---|---|---|---|---|---|---|
| Dry condition | | 60°C 3 min | 60°C 3 min | 60°C 3 min | 60°C 3 min | 60°C 3 min | 60°C 3 min | 60°C 3 min | 60°C 3 min | 60°C 3 min | 60°C 3 min | 60°C 3 min |
| Photocurable condition | Integrated illuminance mJ/cm$^2$ | 450 | 450 | 450 | 600 | 600 | 600 | 600 | 600 | 600 | 600 | 600 |
| Resin layer (I) | Kind of product | A1 | A1 | A2 | A3 | A3 | A3 | A3 | A3 | A3 | A3 | A4 |
| | Active energy ray-curable resin | A-1Ad | A-1Ad | A-1Ae | A-1Aa | A-1Aa | A-1Aa | A-1Aa | A-1Aa | A-1Aa | A-1Aa | A-1Ab |
| | Film thickness (μm) | 28 | 13 | 13 | 1 | 5 | 7 | 10 | 15 | 20 | 10 | 10 |
| Resin layer (III) | Kind of product | C2 | C2 | C2 | C2 | C2 | C2 | C2 | C2 | C2 | - | C2 |
| | Storage elastic modulus (MPa) | 728 | 728 | 728 | 728 | 728 | 728 | 728 | 728 | 728 | - | 728 |
| | Film thickness (μm) | 45 | 45 | 45 | 45 | 45 | 45 | 45 | 45 | 45 | - | 45 |
| Resin layer (II) | Kind of product | B1 | B1 | B1 | B1 | B1 | B1 | B1 | B1 | B1 | B1 | B1 |
| | Storage elastic modulus (MPa) | 166 | 166 | 166 | 166 | 166 | 166 | 166 | 166 | 166 | 166 | 166 |
| | Film thickness (μm) | 5 | 5 | 5 | 5 | 5 | 5 | 5 | 5 | 5 | 50 | 5 |
| | Tg (°C) | 78 | 78 | 78 | 78 | 78 | 78 | 78 | 78 | 78 | 78 | 78 |
| Multilayer film | TT (%) | 91.9 | 92.0 | 91.9 | 92.2 | 92.3 | 92.3 | 92.3 | 92.2 | 92.1 | 923 | 92.0 |
| | Haze (%) | 1.5 | 14 | 1.9 | 0.9 | 1.6 | 29 | 1.0 | 1.9 | 2.1 | 1.0 | 1.1 |
| | Sticking | A | A | A | A | A | A | A | A | A | A | A |
| | Tensile elongation at break (%) | 2 | 1 | 2 | 10 | 4 | 3 | 2 | 2 | 1 | 3 | 2 |

(continued)

| Example | | 1 | 2 | 3 | 4 | 5 | 6 | 7 | 8 | 9 | 10 | 11 |
|---|---|---|---|---|---|---|---|---|---|---|---|---|
| Dry condition | | 60°C 3 min | 60°C 3 min | 60°C 3 min | 60°C 3 min | 60°C 3 min | 60°C 3 min | 60°C 3 min | 60°C 3 min | 60°C 3 min | 60°C 3 min | 60°C 3 min |
| Melamine decorative board | Crack after molding | A | A | A | A | A | A | A | A | B | A | A |
| | Melamine fixability after boiling test | A | A | A | A | A | A | A | A | A | A | A |
| | Melamine fixability after hot water test | A | A | A | A | A | A | A | A | A | A | A |
| | Scratch hardness (N) | 3 | 2.5 | 2 | 2 | 2 | 2.5 | 3 | 3.5 | 4 | 2.5 | 2.5 |
| | Embossability of gloss value at 60° (%) | 84 | 44 | - | 7 | 12 | 15 | 36 | 47 | 74 | - | - |

[Table 5]

| | Example | 12 | 13 | 14 | 15 | 16 | 17 | 18 | 19 | 20 | 21 | 22 | 23 |
|---|---|---|---|---|---|---|---|---|---|---|---|---|---|
| | Dry condition | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min |
| Photocurable condition | Integrated illuminance mJ/cm$^2$ | 1200 | 1200 | 1200 | 1200 | 1200 | 1200 | 1200 | 1200 | 1200 | 1200 | 1200 | 1200 |
| Resin layer (I) | Kind of product | A5 | A5 | A5 | A5 | A5 | A5 | A5 | A5 | A5 | A5 | A5 | A5 |
| | Active energy ray-curable resin | A-1Ac | A-1Ac | A-1Ac | A-1Ac | A-1Ac | A-1Ac | A-1Ac | A-1Ac | A-1Ac | A-1Ac | A-1Ac | A-1Ac |
| | Film thickness (μm) | 1 | 5 | 7 | 10 | 15 | 20 | 28 | 10 | 10 | 10 | 10 | 10 |
| Resin layer (III) | Kind of product | C2 | C2 | C2 | C2 | C2 | C2 | C2 | C1 | C3 | C5 | C6 | C7 |
| | Storage elastic modulus (MPa) | 728 | 728 | 728 | 728 | 728 | 728 | 728 | 42 | 15 | 689 | 648 | 631 |
| | Film thickness (μm) | 45 | 45 | 45 | 45 | 45 | 45 | 45 | 45 | 45 | 45 | 45 | 45 |
| Resin layer (II) | Kind of product | B1 | B1 | B1 | B1 | B1 | B1 | B1 | B1 | B1 | B1 | B1 | B1 |
| | Storage elastic modulus (MPa) | 166 | 166 | 166 | 166 | 166 | 166 | 166 | 166 | 166 | 166 | 166 | 166 |
| | Film thickness (μm) | 5 | 5 | 5 | 5 | 5 | 5 | 5 | 5 | 5 | 5 | 5 | 5 |
| | Tg (°C) | 78 | 78 | 78 | 78 | 78 | 78 | 78 | 78 | 78 | 78 | 78 | 78 |
| Multilayer film | TT (%) | 923 | 923 | 922 | 92.0 | 91.8 | 91.5 | 91.9 | 92.4 | 91.8 | 92.5 | 92.6 | 92.6 |
| | Haze (%) | 0.7 | 2.3 | 0.9 | 1.5 | 4.8 | 5.5 | 6.6 | 3.8 | 14 | 10.8 | 12.9 | 11.2 |
| | Sticking | A | A | A | A | A | A | A | A | A | A | A | A |
| | Tensile elongation at break (%) | 9 | 5 | 4 | 4 | 2 | 1 | 1 | 4 | 4 | 2 | 3 | 4 |

(continued)

| Example | | 12 | 13 | 14 | 15 | 16 | 17 | 18 | 19 | 20 | 21 | 22 | 23 |
|---|---|---|---|---|---|---|---|---|---|---|---|---|---|
| Dry condition | | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min | 80°C 3 min |
| Melamine decorative board | Crack after molding | A | A | A | A | A | A | A | A | B | A | A | A |
| | Melamine fixability after boiling test | A | A | A | A | A | A | A | A | A | A | A | A |
| | Melamine fixability after hot water test | A | A | A | A | A | A | A | A | A | A | A | A |
| | Scratch hardness (N) | 2 | 25 | 2.5 | 3 | 3.5 | 3.5 | 4 | 2 | 2 | 3 | 3 | 3 |
| | Embossability of gloss value at 60° (%) | 6 | 10 | 13 | 28 | 41 | 47 | 61 | - | - | - | - | - |

[Table 6]

| Example | | 24 | 25 | 26 | 27 | 28 | 29 | 30 | 31 | 32 | 33 | 34 |
|---|---|---|---|---|---|---|---|---|---|---|---|---|
| Dry condition | | 80°C 3 min | 80°C 3 min | 80°C 3 min | 80°C 3 min | 80°C 3 min | 80°C 3 min | 60°C 3 min | 60°C 3 min | 60°C 3 min | 60°C 3 min | 60°C 3 min |
| Photocurable condition | Integrated illuminance mJ/cm$^2$ | 1200 | 1200 | 1200 | 1200 | 1200 | 1200 | 450 | 450 | 450 | 450 | 450 |
| Resin layer (I) | Kind of product | A5 | A5 | A5 | A5 | A5 | A5 | A6 | A6 | A6 | A6 | A6 |
| | Active energy ray-curable resin | A-1Ac | A-1Ac | A-1Ac | A-1Ac | A-1Ac | A-1Ac | HX-RPH | HX-RPH | HX-RPH | HX-RPH | HX-RPH |
| | Film thickness (μm) | 10 | 10 | 10 | 10 | 10 | 10 | 6 | 12 | 12 | 12 | 27 |
| Resin layer (III) | Kind of product | C8 | C8 | - | - | - | - | C2 | C2 | C1 | - | C2 |
| | Storage elastic modulus (MPa) | 997 | 997 | - | - | - | - | 728 | 728 | 42 | - | 728 |
| | Film thickness (μm) | 45 | 45 | - | - | - | - | 45 | 45 | 45 | - | 45 |
| Resin layer (II) | Kind of product | B5 | B6 | B1 | B2 | B3 | B4 | B1 | B1 | B1 | B1 | B1 |
| | Storage elastic modulus (MPa) | - | - | 166 | 247 | 197 | 163 | 166 | 166 | 166 | 166 | 166 |
| | Film thickness (μm) | 5 | 5 | 50 | 50 | 50 | 50 | 5 | 5 | 5 | 50 | 5 |
| | Tg (°C) | 131 | 131 | 78 | 78 | 78 | 78 | 78 | 78 | 78 | 78 | 78 |
| Multilayer film | TT (%) | 92.4 | 92.3 | 92.5 | 92.3 | 92.3 | 92.5 | 92.1 | 92.1 | 92.1 | 92.2 | 92.1 |
| | Haze (%) | 9.0 | 6.0 | 5.8 | 6.0 | 7.1 | 9.6 | 2.0 | 30 | 1.8 | 1.2 | 1.5 |
| | Sticking | A | A | A | A | A | A | A | A | A | A | A |
| | Tensile elongation at break (%) | 2 | 2 | 4 | 3 | 2 | 3 | 2 | 2 | 1 | 1 | 1 |

(continued)

| Example | | 24 | 25 | 26 | 27 | 28 | 29 | 30 | 31 | 32 | 33 | 34 |
|---|---|---|---|---|---|---|---|---|---|---|---|---|
| Dry condition | | 80°C 3 min | 80°C 3 min | 80°C 3 min | 80°C 3 min | 80°C 3 min | 80°C 3 min | 60°C 3 min | 60°C 3 min | 60°C 3 min | 60°C 3 min | 60°C 3 min |
| Melamine decorative board | Crack after molding | A | A | A | A | A | A | A | A | A | A | B |
| | Melamine fixability after boiling test | A | A | A | A | A | A | A | A | A | A | A |
| | Melamine fixability after hot water test | A | A | A | A | A | A | A | A | A | A | A |
| | Scratch hardness (N) | 4 | 4 | 25 | 3.5 | 3 | 3 | 2 | 2.5 | 1.5 | 1.5 | 2.5 |
| | Embossability of gloss value at 60° (%) | - | - | - | - | - | - | - | - | - | - | - |

[Table 7]

| Comparative Example | | 1 | 2 | 3 | 4 | 5 | 6 | 7 | 8 | 9 |
|---|---|---|---|---|---|---|---|---|---|---|
| Dry condition | | 60°C 3 min | 60°C 3 min | 80°C 3 min | 80°C 3 min | 60°C 3 min | 60°C 3 min | - | - | - |
| Photocurable condition | Integrated illuminance mJ/cm$^2$ | 450 | 600 | 1200 | 1200 | 450 | - | - | - | - |
| Thermosetting condition | Thermal history | - | - | - | - | - | 150°C 60 min | - | - | - |
| Resin layer (I) | Kind of product | A1 | A3 | A5 | A5 | A6 | | - | - | - |
| | Active energy ray-curable resin | A-1Ad | A-1Aa | A-1Ac | A-1Ac | HX-RPH | | - | - | - |
| | Thermosetting resin ($\alpha$-1/$\alpha$-2) | - | - | - | - | - | TPA-B80E /B-1A | - | - | - |
| | Film thickness (um) | 28 | 50 | 50 | 10 | 48 | 26 | - | - | - |
| Resin layer (III) | Kind of product | - | C2 | C2 | C4 | C2 | C2 | C2 | C1 | - |
| | Storage elastic modulus (MPa) | - | 728 | 728 | 4 | 728 | 728 | 728 | 42 | - |
| | Film thickness (um) | - | 45 | 45 | 45 | 45 | 45 | 45 | 45 | - |
| Resin layer (II) | Kind of product | 8UA-017 | B1 | B1 | B1 | B1 | B1 | B1 | B1 | B1 |
| | Storage elastic modulus (MPa) | - | 166 | 166 | 166 | 166 | 166 | 166 | 166 | 166 |
| | Film thickness (um) | 5 | 5 | 5 | 5 | 5 | 5 | 5 | 5 | 50 |
| | Tg (°C) | 10 | 78 | 78 | 78 | 78 | 78 | 78 | 78 | 78 |
| Multilayer film | TT (%) | - | 91.7 | 91.0 | 92.1 | 92.2 | 91.88 | 92.0 | 92.4 | 92.5 |
| | Haze (%) | - | 100 | 10.3 | 2.9 | 24 | 1.55 | 24 | 1.0 | 1.0 |
| | Sticking | C | B | B | A | B | B | - | - | - |
| | Tensile elongation at break (%) | - | 1 | 1 | 4 | 1 | - | - | - | - |

(continued)

| Comparative Example | | 1 | 2 | 3 | 4 | 5 | 6 | 7 | 8 | 9 |
|---|---|---|---|---|---|---|---|---|---|---|
| Dry condition | | 60°C 3 min | 60°C 3 min | 80°C 3 min | 80°C 3 min | 60°C 3 min | 60°C 3 min | - | - | - |
| Melamine decorative board | Crack after molding | - | C | C | B | C | A | A | A | A |
| | Melamine fixability after boiling test | C | A | A | A | A | A | A | A | A |
| | Melamine fixability after hot water test | C | A | A | A | A | A | A | A | A |
| | Scratch hardness (N) | 2 | 4.5 | 4.5 | 1.5 | 3 | 2 | 1.0 | 0.5 | 0.5 |
| | Embossability of gloss value at 60° (%) | - | - | - | - | - | 10.1 | 11 | - | - |

From the above-described Examples and production Examples, the following points were clarified. In the multilayer films obtained in Examples 1 to 34, the melamine decorative board had excellent adhesion since 10 or more squares were not peeled off in the adhesion evaluation even after the durability test such as the boiling test and the hot water test. In addition, the resin layer (II) had no stick, and the handleability was excellent. Furthermore, the multilayer films obtained in Examples 1 to 34 have excellent surface hardness, can prevent cracks to the layer (I) during molding, and have a high industrial utilization value. In addition, since the multilayer films obtained in Examples 1 to 34 have no support film, and a step of peeling the support film is not required when the multilayer film is laminated with the melamine decorative board, the process could be shortened, and thus, the industrial utilization value is high.

On the other hand, in the multilayer film obtained in Comparative Example 1, the resin layer (II) was sticky, the handleability was inferior, and the adhesion after the durability test such as the boiling test and the hot water test were inferior.

In addition, since the multilayer films obtained in Comparative Examples 2, 3, and 5 had the thickness of the resin layer (I) of greater than 35 $\mu$m, cracks after heat lamination were inferior.

In the multilayer film obtained in Comparative Example 4, since the storage elastic modulus of the resin layer (II) was lower than 10 MPa, cracks after heat lamination were inferior.

Since the multilayer film obtained in Comparative Example 6 does not have a layer formed of the active energy ray-curable resin, the problem of cracks after molding does not occur.

Furthermore, in the melamine decorative board s using the multilayer films obtained in Comparative Examples 7 to 9, since the resin layer (I) was not laminated, a problem of cracking after molding did not occur, and the surface hardness (the scratch hardness) was inferior.

Although the present invention has been described with reference to the above-described embodiments and examples, the present invention is not limited to the above-described embodiments and examples. In the configuration and details of the present invention, various modifications that can be understood by those skilled in the art can be made within the scope of the present invention.

[Industrial Applicability]

According to the present invention, the multilayer film, the protective film for a melamine decorative board, and the melamine decorative board, which achieve both adhesion to the melamine decorative board and surface hardness, have no sticking, are excellent in handleability, and are able to prevent cracks during molding, and the production method of these can be provided.

[Reference Signs List]

100A, 100B: Multilayer film
101a, 101b: Resin layer (I) (second layer)
102a: Resin layer (II) (layer (X), first layer)
102b: Resin layer (II)
103b: Resin layer (III) (layer (X))
200A, 200B: Melamine decorative board
201: Melamine base material

## Claims

**1.** A production method for a multilayer film comprising:

producing a film including a first layer formed from a resin composition (b) containing a core-shell rubber; and
applying a resin composition (a) containing an active energy ray-curable resin on the film including the first layer and curing the resin composition (a) to produce a second layer,
wherein the second layer has a thickness of 35 μm or less.

**2.** A production method for a multilayer film comprising:

producing a film including a first layer formed from a resin composition (b) containing a core-shell rubber and a reactive group-containing resin; and
applying a resin composition (a) containing an active energy ray-curable resin on the film including the first layer and curing the resin composition (a) to produce a second layer.

**3.** A production method for a melamine decorative board serving as a laminate including

a multilayer film that includes a film including a first layer formed from a resin composition (b) containing an acrylic resin and includes a second layer formed from a resin composition (a) containing an active energy ray-curable resin, and
a melamine base material, wherein the film including the first layer is laminated on a melamine base material side,
the method comprising:
adhering the film including the first layer to the melamine base material by heating and pressurization.

**4.** The production method for a melamine decorative board according to Claim 3, the method further comprising unwinding the multilayer film from a roll around which the multilayer film has been wound without an inclusion, prior to the adhering the film including the first layer to the melamine substrate.

**5.** A multilayer film comprising:

a resin layer (I); and
a layer (X),
wherein the resin layer (I) contains an active energy ray-curable resin (A-1),
the layer (X) contains an acrylic resin, and
a storage elastic modulus E' of the layer (X) at a measurement temperature of 100°C and a frequency of 0.1 Hz is 10 MPa or more and 2000 MPa or less.

**6.** The multilayer film according to Claim 5,
wherein the layer (X) contains a core-shell rubber.

**7.** The multilayer film according to Claim 5 or 6,
wherein the resin layer (I) has a thickness of less than 30 μm.

**8.** The multilayer film according to any one of Claims 5 to 7,
wherein the resin layer (I) has a thickness of 1 μm or more.

**9.** The multilayer film according to any one of Claims 5 to 8,
wherein the active energy ray-curable resin (A-1) comprises an ultravioletcurable resin (A-1A).

**10.** The multilayer film according to any one of Claims 5 to 9,
wherein the active energy ray-curable resin (A-1) comprises an electron beamcurable resin (A-1B).

**11.** The multilayer film according to any one of Claims 5 to 10,
wherein the resin layer (I) further contains at least one resin selected from the group consisting of an acrylic resin and a urethane acrylate-based resin.

**12.** The multilayer film according to any one of Claims 5 to 11,

wherein the resin layer (I) and the layer (X) are in contact with each other, and
the acrylic resin includes a reactive group-containing resin including a monomer unit having a reactive group.

**13.** The multilayer film according to Claim 12,
wherein the reactive group-containing resin has a glass-transition temperature of 60°C or higher and lower than 150°C.

**14.** The multilayer film according to Claim 12 or 13,
wherein the monomer unit having a reactive group contains at least one monomer unit having a reactive group selected from the group consisting of a monomer unit having a group reactive to an amino group and a monomer unit having a group reactive to a methylol group.

**15.** The multilayer film according to any one of Claims 12 to 14,
wherein a content of the monomer unit having a reactive group with respect to 100% by mass of the reactive group-containing resin is 3% by mass or more.

**16.** The multilayer film according to any one of Claims 5 to 11, further comprising a resin layer (II) containing an acrylic resin,

wherein the layer (X) is provided between the resin layer (I) and the resin layer (II), and
the acrylic resin contained in the resin layer (II) contains a reactive group-containing resin containing a monomer unit having a reactive group.

**17.** The multilayer film according to Claim 16,
wherein the reactive group-containing resin has a glass-transition temperature of 60°C or higher and lower than 150°C.

**18.** The multilayer film according to Claim 16 or 17,
wherein the monomer unit having a reactive group contains at least one monomer unit having a reactive group selected from the group consisting of a monomer unit having a group reactive to an amino group and a monomer unit having a group reactive to a methylol group.

**19.** The multilayer film according to any one of Claims 16 to 18,
wherein a content of the monomer unit having a reactive group with respect to 100% by mass of the reactive group-containing resin is 3% by mass or more.

**20.** A protective film for a melamine decorative board comprising the multilayer film according to any one of Claims 5 to 19.

**21.** A melamine decorative board, wherein a melamine base material is laminated on opposite side of the resin layer (I) surface of the multilayer film according to any one of claims 5 to 15.

**22.** A melamine decorative board, wherein a melamine base material is laminated on the resin layer (II) side surface of the multilayer film according to any one of claims 16 to 19.

FIG. 1

100A
101a
102a

FIG. 2

100B
101b
103b
102b

FIG. 3

200A
101a
102a
201

FIG. 4

200B
101b
103b
102b
201

**INTERNATIONAL SEARCH REPORT**

International application No. **PCT/JP2022/034961**

**A. CLASSIFICATION OF SUBJECT MATTER**

***B32B 27/16***(2006.01)i; ***B32B 27/30***(2006.01)i
FI: B32B27/16; B32B27/30 A

According to International Patent Classification (IPC) or to both national classification and IPC

**B. FIELDS SEARCHED**

Minimum documentation searched (classification system followed by classification symbols)

B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/003788 A1 (KURARAY CO., LTD.) 04 January 2018 (2018-01-04) claims, paragraphs [0016], [0030], [0079], [0084]-[0089], [0097]-[0098], [0112], examples 7-9 | 1-2, 5-15 |
| X | WO 2018/190175 A1 (NITTO DENKO CORPORATION) 18 October 2018 (2018-10-18) claims, paragraphs [0007], [0031], [0051]-[0053], [0067]-[0071], examples 1-4 | 1-2 |
| X | JP 3196164 U (IMI KK) 26 February 2015 (2015-02-26) claims, paragraphs [0015], [0018]-[0023] | 3, 4 |
| P, X | WO 2022/137768 A1 (KANEKA CORP) 30 June 2022 (2022-06-30) claims, paragraphs [0019]-[0020], [0028]-[0031], [0101]-[0103], [0132], examples 1-12 | 1-2, 5-15 |
| A | WO 2020/209264 A1 (DIC CORPORATION) 15 October 2020 (2020-10-15) claims, paragraphs [0074]-[0079], [0083], examples 1-25 | 1-22 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/034961**

**Box No. III Observations where unity of invention is lacking (Continuation of item 3 of first sheet)**

This International Searching Authority found multiple inventions in this international application, as follows:

Claims include three inventions of claims 1-2, claims 3-4, and claims 5-22.

Claims 3-4 and claims 5-22 are not dependent on claim 1 and cannot be considered to have a special technical feature identical or corresponding to that of claim 1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/034961**

| Patent document cited in search report | Publication date (day/month/year) | Patent family member(s) | Publication date (day/month/year) |
|---|---|---|---|
| WO 2018/003788 A1 | 04 January 2018 | US 2019/0168493 A1<br>claims, paragraphs [0016]-[0021], [0040], [0094], [0100]-[0106], [0144], examples 7-9 | |
| | | EP 3476595 A1 | |
| | | CN 109414916 A | |
| | | KR 10-2019-0023051 A | |
| | | TW 201811563 A | |
| WO 2018/190175 A1 | 18 October 2018 | CN 110520765 A | |
| | | KR 10-2019-0137805 A | |
| | | TW 201842359 A | |
| JP 3196164 U | 26 February 2015 | (Family: none) | |
| WO 2022/137768 A1 | 30 June 2022 | (Family: none) | |
| WO 2020/209264 A1 | 15 October 2020 | KR 10-2021-0127750 A1 | |
| | | CN 113661064 A | |
| | | TW 202100600 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021152115 A
- WO 2014192708 A
- JP 4759020 B
- JP 4293886 B
- JP 2008296539 A
- JP 3124096 B


### Non-patent literature cited in the description


- POLYMER HANDBOOK. WILEY INTERSCIENCE
- Decorative Board Handbook. New Materials Laboratory, 1948
- **J. BRANDRUP.** Polymer HandBook. Interscience, 1989